# EUROPEAN PATENT APPLICATION

(11) **EP 4 640 028 A1**
(43) Date of publication of application: **29.10.2025**
(21) Application number: 23906400.9
(22) Date of filing: 27.09.2023
(51) Int. Cl.: A01B 69/00, A01M 7/00

(54) **AGRICULTURAL WORK ASSISTANCE SYSTEM AND AGRICULTURAL MACHINE**

(30) Priority: 23.12.2022 JP 2022206698
(71) Applicant: KUBOTA CORPORATION, Osaka-shi, Osaka 556-8601 (JP)
(72) Inventor: KIKUCHI Ryota, Sakai-shi, Osaka 590-0908 (JP); MORISHITA Takafumi, Sakai-shi, Osaka 590-0908 (JP)
(74) Representative: Müller-Boré & Partner Patentanwälte PartG mbB
(86) International application number: PCT/JP2023/035080
(87) International publication number: WO 2024/135025

(57) **Abstract**

When agricultural work is performed by a working device (2) while an agricultural machine (1) is caused to travel in an agricultural field, the working device (2) is manually operated appropriately and easily.

An agricultural work assistance system (100) includes a controller (60) configured or programmed to, when agricultural work is to be performed or being performed by a working device (2) coupled to an agricultural machine (1) while the agricultural machine (1) is traveling in an agricultural field, determine whether or not a manual operation of the working device (2) is required, and an output interface (52) to output a notification (D11 to D13) indicating that the manual operation of the working device (2) is required, when the controller (60) determines that the manual operation of the working device (2) is required.

## Description

### Technical Field

The present invention relates to a technique for assisting in performing agricultural work with a working device coupled to an agricultural machine while causing the agricultural machine to travel in an agricultural field.

### Background Art

PTL 1 discloses a technique in which when a controller performs agricultural work with a working device (working machine for tillage) coupled to a tractor while causing the tractor to travel based on a plurality of travel lines created in a working area at the center of an agricultural field and a position of the tractor measured by a positioning system, the controller causes an actuator to raise and lower the working device between a working height and a non-working height (retreat height).

### Citation List

### Patent Literature

PTL 1: Japanese Unexamined Patent Application Publication No. 2017-135995

### Summary of Invention

### Technical Problem

For example, a working device such as a boom sprayer, whose state during working or non-working time cannot be controlled by an agricultural machine at an appropriate timing, needs to be manually operated by a user using an assist controller or the like. However, it is difficult for the user to manually operate the working device at a appropriate point in time when performing agricultural work with the working device while causing the agricultural machine to travel based on a travel line and the like.

In view of the above-described problem, an object of the present invention is to manually operate a working device appropriately and easily when performing agricultural work with the working device while causing an agricultural machine to travel in an agricultural field.

### Solution to Problem

Technical solutions of the present invention to attain the above-described technical object include the following characteristic feature(s).

An agricultural work assistance system according to an example embodiment of the present invention includes a controller configured or programmed to, when agricultural work is to be performed or being performed by a working device coupled to an agricultural machine while the agricultural machine is traveling in an agricultural field, determine whether or not a manual operation of the working device is required, and an output interface to output a notification indicating that the manual operation of the working device is required, when the controller determines that the manual operation of the working device is required.

The agricultural work assistance system may further include a position detector to detect a position of the agricultural machine. The controller may be configured or programmed to determine whether or not the manual operation of the working device is required when, while the agricultural work is performed by the working device while the agricultural machine is traveling along a travel line created on an agricultural field map indicating the agricultural field, the agricultural machine reaches a position corresponding to at least one of a start point or an end point of the travel line, and, in a case that the manual operation of the working device is required, temporarily stop the agricultural machine and cause the output interface to output the notification indicating that the manual operation of the working device is required.

The agricultural work assistance system may further include an input interface to receive input of agricultural field information representing the agricultural field, device information relating to the working device, and work information relating to the agricultural work. The controller may be configured or programmed to determine whether or not the manual operation of the working device is required based on the agricultural field information, the device information, the work information, and the position of the agricultural machine.

The agricultural machine may include a vehicle body to travel and to couple the working device thereto, the position detector, and the controller. The controller may be configured or programmed to perform an automatic work mode to cause the working device to perform the agricultural work on the agricultural field while performing automatic travel or automatic steering of the vehicle body based on a plurality of the travel lines created on the agricultural field map indicating the agricultural field and based on a position of the vehicle body of the agricultural machine detected by the position detector, and determine whether or not the manual operation of the working device is required when the vehicle body reaches each of positions corresponding to a start point and an end point of one of the plurality of travel lines during the automatic work mode, and, in a case that the manual operation of the working device is required, temporarily stop the automatic work mode to temporarily stop the vehicle body and cause the output interface to output a notification indicating that the agricultural work is temporarily stopped and that the manual operation of the working device is required.

The agricultural work assistance system may further include an automatic switch to receive a start operation to issue an instruction to start the automatic work mode. The controller may be configured or programmed to start the automatic work mode in response to the start operation of the automatic switch, when the automatic work mode is temporarily stopped, cause the output interface to output a notification indicating that the agricultural work in the automatic work mode is resumed by the start operation of the automatic switch, and resume the automatic work mode when the start operation of the automatic switch is performed while the automatic work mode is temporarily stopped.

The controller may be configured or programmed to cause the output interface to output the notification indicating that the manual operation of the working device is required and content of the manual operation.

The controller may be configured or programmed to, in a case that the working device is a working device to be manually selectively operated into a working state in which the working device performs the agricultural work or into a non-working state in which the working device does not perform the agricultural work, cause the output interface to output the notification indicating that the manual operation of the working device is required to bring the working device into the working state when the agricultural machine reaches a position corresponding to the start point of the travel line, and cause the output interface to output the notification indicating the manual operation of the working device is required to bring the working device into the non-working state when the agricultural machine reaches a position corresponding to the end point of the travel line.

The agricultural work assistance system may further include the working device which includes a spreader including at least one spreading unit extending in a width direction of the agricultural machine, the spreader being configured to spread a material from a plurality of spreading ports arranged at predetermined one or more intervals in a longitudinal direction of the at least one spreading unit. The working device may be configured to be manually selectively operated into the working state in which the material is spread from at least one of the plurality of spreading ports to the agricultural field or into the non-working state in which the material is not spread from the plurality of spreading ports.

The working device may be configured to be manually operated to adjust a working width thereof that is a width of an area of the agricultural field worked by the working device. The controller may be configured or programmed to, when the agricultural machine reaches a position corresponding to at least one of the start point or the end point of the travel line, in a case that the manual operation to adjust the working width of the working device is required, temporarily stop the agricultural machine and determine a target working width to be achieved by the adjustment, and cause the output interface to output the notification indicating the target working width and indicating that the manual operation to adjust the working width is required.

The agricultural work assistance system may further include an input interface to receive input of whether-to-stop information indicating whether or not to temporarily stop the agricultural machine. The controller may be configured or programmed to, when the agricultural machine reaches a position corresponding to at least one of the start point or the end point of the travel line, temporarily stop the agricultural machine in a case that the manual operation of the working device is required and the whether-to-stop information indicates to temporarily stop the agricultural machine, and not temporarily stop the agricultural machine in a case that the whether-to-stop information indicates not to temporarily stop the agricultural machine even in a case that the manual operation of the working device is required.

The working device may be configured to be manually operated to adjust a working width thereof that is a width of an area of the agricultural field worked by the working device. The controller may be configured or programmed to, when the agricultural machine reaches a position corresponding to at least one of the start point or the end point of the travel line, in a case that the manual operation to adjust the working width of the working device is required, temporarily stop the agricultural machine even in a case that the whether-to-stop information indicates not to temporarily stop the agricultural machine.

The output interface may include a display. The controller may be configured or programmed to cause the display to display the agricultural field map, the position of the agricultural machine, and the notification indicating that the manual operation of the working device is required.

An agricultural machine according to an example embodiment of the present invention includes a vehicle body to travel, a controller configured or programmed to, when agricultural work is to be performed or being performed by a working device coupled to the vehicle body while the vehicle body is traveling in an agricultural field, determine whether or not a manual operation of the working device is required, and an output interface to output a notification indicating that the manual operation of the working device is required, when the controller determines that the manual operation of the working device is required. Advantageous Effects of Invention

The present invention makes it possible to manually operate a working device appropriately and easily in performing agricultural work with the working device while causing an agricultural machine to travel in an agricultural field.

### Brief Description of Drawings

[FIG. 1] FIG. 1 is a configuration diagram of an agricultural work assistance system.
[FIG. 2] FIG. 2 is a diagram illustrating a work selection screen.
[FIG. 3] FIG. 3 is a diagram illustrating a working device setting confirmation screen.
[FIG. 4] FIG. 4 is a diagram illustrating an agricultural field selection screen.
[FIG. 5A] FIG. 5A is a diagram illustrating a route creation screen.
[FIG. 5B] FIG. 5B is a diagram illustrating the route creation screen after travel lines are created.
[FIG. 5C] FIG. 5C is a diagram illustrating the route creation screen after a travel route is created.
[FIG. 6] FIG. 6 is a diagram illustrating a ridge information setting screen.
[FIG. 7] FIG. 7 is a diagram illustrating a cooperative work setting screen.
[FIG. 8] FIG. 8 is a diagram illustrating a travel control screen.
[FIG. 9A] FIG. 9A is a flowchart illustrating a travel line creation operation of an agricultural work assistance device.
[FIG. 9B] FIG. 9B is a flowchart continued from FIG. 9A.
[FIG. 10A] FIG. 10A is a diagram illustrating an agricultural field map.
[FIG. 10B] FIG. 10B is a diagram illustrating ridge positions.
[FIG. 10C] FIG. 10C is a diagram illustrating the ridge positions and first travel lines of pest control work.
[FIG. 10D] FIG. 10D is a diagram illustrating the first travel lines and a second travel line of the pest control work.
[FIG. 10E] FIG. 10E is a diagram illustrating a travel route of the pest control work.
[FIG. 11] FIG. 11 is a diagram illustrating a traveling device of an agricultural machine and a ridge.
[FIG. 12A] FIG. 12A is a diagram illustrating an example of a working device with left-right symmetry and a remainder area.
[FIG. 12B] FIG. 12B is a diagram illustrating another example of the working device with left-right symmetry and the remainder area.
[FIG. 12C] FIG. 12C is a diagram illustrating an example of a working device with a one-sided arrangement and a remainder area.
[FIG. 12D] FIG. 12D is a diagram illustrating another example of the working device with a one-sided arrangement and the remainder area.
[FIG. 12E] FIG. 12E is a diagram illustrating another example of the working device with a one-sided arrangement and the remainder area.
[FIG. 12F] FIG. 12F is a diagram illustrating another example of the working device with a one-sided arrangement and the remainder area.
[FIG. 13A] FIG. 13A is a flowchart illustrating a display operation of the agricultural work assistance device.
[FIG. 13B] FIG. 13B is a flowchart continued from FIG. 13A.
[FIG. 14A] FIG. 14A is a diagram illustrating an example of a route creation screen on which work lines and travel lines are displayed.
[FIG. 14B] FIG. 14B is a diagram illustrating another example of the route creation screen on which the work lines and the travel lines are displayed.
[FIG. 15] FIG. 15 is a diagram illustrating a route creation screen on which display setting keys indicative of implementation and non-implementation are displayed.
[FIG. 16A] FIG. 16A is a flowchart illustrating an operation of the agricultural work assistance system in an automatic work mode.
[FIG. 16B] FIG. 16B is a flowchart continued from FIG. 16A.
[FIG. 17A] FIG. 17A is a diagram illustrating an example of a first notification screen.
[FIG. 17B] FIG. 17B is a diagram illustrating an example of a second notification screen.
[FIG. 17C] FIG. 17C is a diagram illustrating an example of a third notification screen.
[FIG. 18] FIG. 18 is a side view of the agricultural machine.
[FIG. 19] FIG. 19 is a plan view of the agricultural machine and an earthing up device.
[FIG. 20A] FIG. 20A is a plan view of the agricultural machine and a spreader in a protruding state.
[FIG. 20B] FIG. 20B is a plan view of the agricultural machine and the spreader in a retracted state.
[FIG. 20C] FIG. 20C is a plan view of the agricultural machine and the spreader in a retracted state.
[FIG. 21A] FIG. 21A is a schematic plan view of another spreader.
[FIG. 21B] FIG. 21B is a schematic plan view of another spreader.
[FIG. 21C] FIG. 21C is a schematic plan view of another spreader.
[FIG. 21D] FIG. 21D is a schematic plan view of another spreader.

### Description of Embodiments

Hereinafter, an embodiment of the present invention will be described with reference to the drawings.

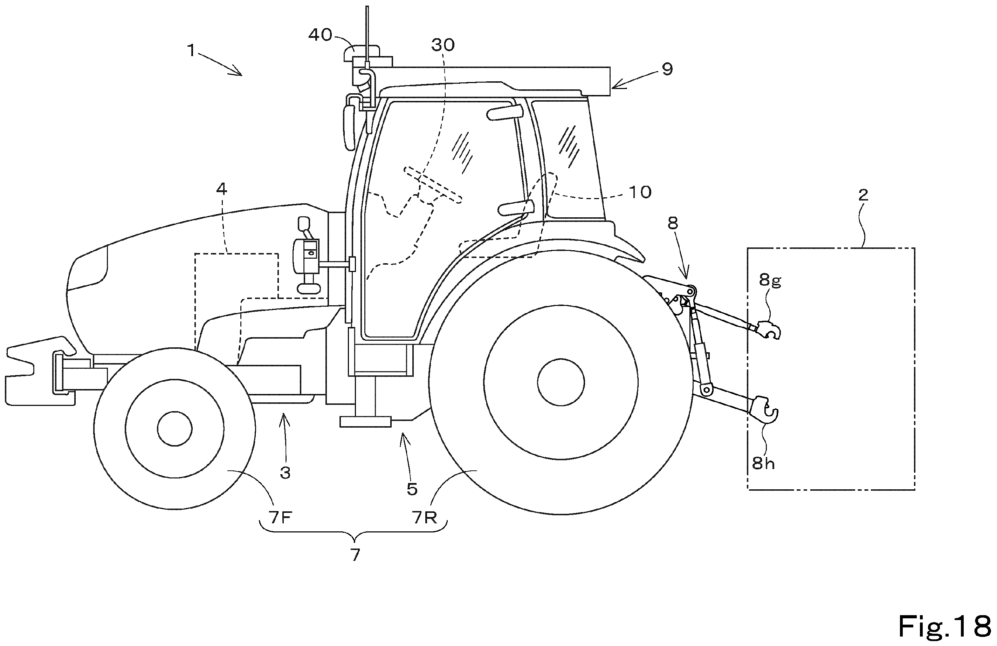

FIG. 18 is a side view of an agricultural machine 1 of the present embodiment. The agricultural machine 1 includes a tractor. Note that an agricultural machine of the present invention is not limited to a tractor and may include, for example, another agricultural machine such as a rice transplanter or a combine, or a working vehicle or the like other than a tractor that performs agricultural work.

The agricultural machine 1 includes a vehicle body 3, a prime mover 4, a transmission 5, and at least one traveling device 7. The vehicle body 3 is provided with a pair of left and right traveling devices 7 to support the vehicle body 3 such that the vehicle body 3 can travel. Each of the pair of traveling devices 7 includes a front wheel 7F and a rear wheel 7R. The front wheel 7F may be of a tire type or a crawler type. The rear wheel 7R may also be of a tire type or a crawler type.

The prime mover 4 includes a diesel engine, an electric motor, or the like. In the present embodiment, the prime mover 4 includes a diesel engine. The transmission 5 can switch a propelling force of the traveling devices 7 by changing speed stages, and can switch between forward travel and reverse travel of the traveling devices 7. A driving force of the prime mover 4 is transmitted to the traveling devices 7 by the transmission 5, and the traveling devices 7 are driven, whereby the vehicle body 3 travels forward and backward. Note that in FIG. 18, the left side is the front of the vehicle body 3 and the right side is the rear of the vehicle body 3. As viewed in FIG. 18, the far side is the right side of the vehicle body 3, and the near side is the left side of the vehicle body 3.

The vehicle body 3 is provided with a cabin 9. An operator's seat 10 is provided inside the cabin 9. A raising/lowering device 8 including a three-point linkage or the like is provided in a rear portion of the vehicle body 3. A working device 2 for performing agricultural work can be coupled to the raising/lowering device 8. Specifically, the working device 2 can be coupled to couplers 8g and 8h provided in the raising/lowering device 8. By coupling the working device 2 to the couplers 8g and 8h, the working device 2 and the vehicle body 3 (the agricultural machine 1) can be coupled to each other, and the vehicle body 3 can tow the working device 2.

The working device 2 performs agricultural work for outdoor cultivation of crops in an agricultural field. For example, the working device 2 includes a tiller (rotary tiller) that performs tillage work on the agricultural field, a spreader that spreads a material such as a fertilizer or an agricultural chemical, an earthing up device (also referred to as a ridger.) that performs earthing up, a seeder that sows seeds of crops, a transplanter that transplants seedlings, a harvester that harvests crops, and the like.

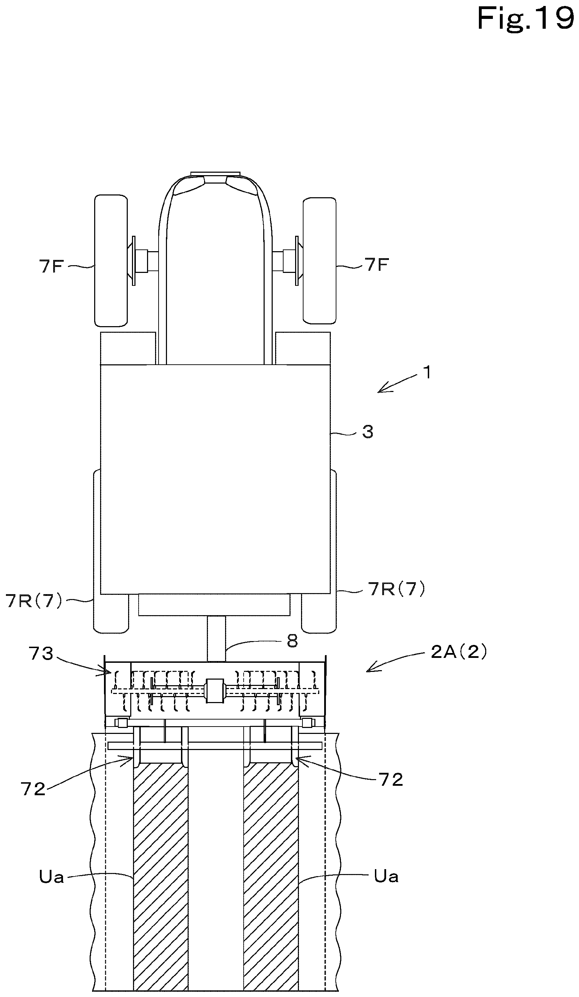

FIG. 19 is a plan view of an example of the agricultural machine 1 and an earthing up device 2A. The earthing up device 2A includes a plurality of ridgers 72, a rotary tiller 73, and the like. The rotary tiller 73 is provided forward of the plurality of ridgers 72 (in a direction closer to the vehicle body 3 of the agricultural machine 1). The plurality of ridgers 72 are provided at predetermined intervals in a width direction of the agricultural machine 1.

The agricultural machine 1 travels straight forward in the agricultural field, and the earthing up device 2A towed by the agricultural machine 1 is driven. Accordingly, the soil in the agricultural field is cultivated by the rotary tiller 73 and then shaped into trapezoids by the plurality of ridgers 72 to form a plurality of ridges Ua with predetermined widths and at predetermined intervals. In the example illustrated in FIG. 19, since two ridgers 72 are provided in the earthing up device 2A, two strip-shaped ridges Ua are simultaneously formed. The number of the ridgers 72 provided in the earthing up device 2A is not limited to two, and may be one, or three or more. The same number of ridges Ua as the number of installed ridgers 72 provided in the earthing up device 2A are simultaneously formed.

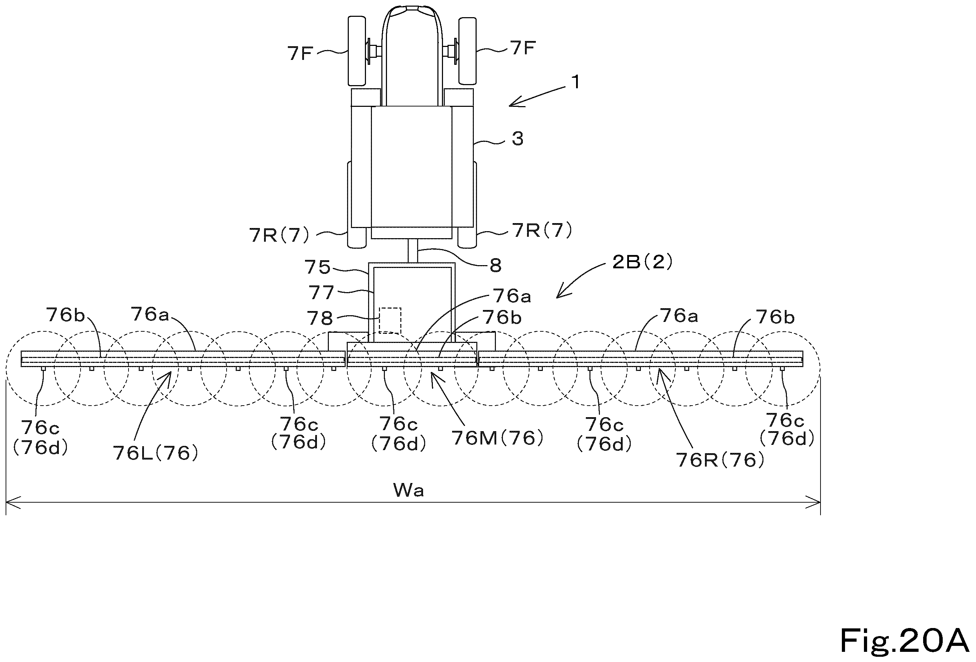

FIGS. 20A to 20C are plan views of one example of the agricultural machine 1 and a spreader 2B. The spreader 2B is also referred to as a boom sprayer. The spreader 2B includes a frame 75, at least one spreading unit 76, a tank 77, a pump 78, and the like. The frame 75 is coupled to the raising/lowering device 8 of the agricultural machine 1, and supports the spreading unit 76, the tank 77, and the pump 78.

As illustrated in FIG. 20A, one or more spreading units 76 are provided to extend in the width direction of the agricultural machine 1. In the present example, three spreading units 76 (76L, 76R, and 76M) are provided in the spreader 2B. The spreading units 76 include booms 76a, spreading pipes 76b, nozzles 76c, and the like. The booms 76a extend in the width direction of the agricultural machine 1. The booms 76a included in the left and right spreading units 76L and 76R include multi-stage booms, and are extendable and retractable in the width direction of the agricultural machine 1. The spreading pipes 76b are installed in parallel with the booms 76a. The spreading pipes 76b are provided with a plurality of nozzles 76c at predetermined intervals in an axial direction of the spreading pipes 76b. Each of the nozzles 76c has a spreading port 76d formed at a tip thereof. That is, a plurality of spreading ports 76d are provided at the predetermined intervals in a longitudinal direction of the spreading units 76. The tank 77 stores a liquid agricultural chemical. The pump 78 supplies the agricultural chemical in the tank 77 to the nozzles 76c through the spreading pipes 76b.

The agricultural machine 1 travels straight forward in the agricultural field, and the spreader 2B towed by the agricultural machine 1 is driven. Accordingly, a material such as an agricultural chemical or a fertilizer is spread through the spreading ports 76d of the plurality of nozzles 76c, and spreading work (pest control work or fertilization work) is performed. As described below, a spreading state of the spreader 2B can be manually operated. A user manually operates the spreader 2B using an assist controller or an operation box (both not illustrated) provided in the spreader 2B, or the like. Furthermore, the user attaches and detaches an appropriate number of spreading units 76 to and from the frame 75.

Note that spreaders that can be coupled to the agricultural machine 1 include not only the spreader 2B of a towed type illustrated in FIG. 20A but also a direct-mounted type spreader mounted on the vehicle body 3 of the agricultural machine 1. In addition, not only the spreader 2B, which is manually operated using the assist controller or the like, but also a spreader to be controllably connected to the agricultural machine 1 via ISO-BUS is present, and such a spreader is operated by an operation signal transmitted from the agricultural machine 1.

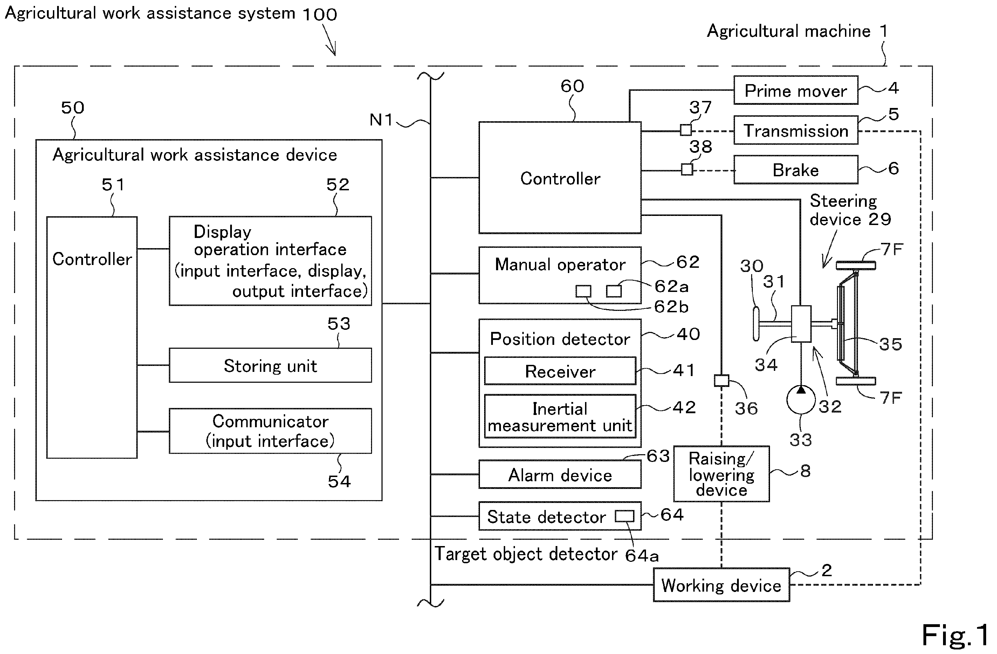

FIG. 1 is a configuration diagram of an agricultural work assistance system 100. The agricultural work assistance system 100 and an agricultural work assistance device 50 assist in performing agricultural work with the working device 2 while causing the agricultural machine 1 to travel in an agricultural field.

The agricultural machine 1 includes a controller 60, a manual operator 62, the prime mover 4, the transmission 5, a brake 6, a steering device 29, the raising/lowering device 8, a position detector 40, an alarm device 63, and a state detector 64. In addition, an in-vehicle network N1 such as a LAN or a CAN is constructed in the agricultural machine 1. The controller 60, the manual operator 62, the position detector 40, the alarm device 63, and the state detector 64 are connected to the in-vehicle network N1. These units included in the agricultural machine 1 are included in the agricultural work assistance system 100.

The controller 60 includes an electronic control unit (ECU) including a CPU and an internal memory. The internal memory of the controller 60 includes a volatile memory and a nonvolatile memory. The controller 60 controls the operation of each unit of the agricultural machine 1 based on a software program and control data stored in the internal memory. The controller 60 is a controller that controls the travel of the agricultural machine 1 and the operation of the working device 2. The manual operator 62 includes a switch, a lever, a pedal, other keys, and the like that can be operated by a driver seated on the operator's seat 10 or the user or the like who is near the agricultural machine 1.

Driving, stopping, and a rotational speed of the prime mover 4 (for example, an engine or an electric motor) are controlled by the controller 60. The transmission 5 is connected to a control valve 37. The control valve 37 is a solenoid valve that operates based on a control signal transmitted from the controller 60. The control valve 37 is supplied with hydraulic fluid delivered from a hydraulic pump 33. While the control valve 37 is illustrated as one block in FIG. 1, an appropriate number of control valves 37 are provided in accordance with the number of hydraulic devices such as a hydraulic clutch or a hydraulic cylinder provided in the transmission 5.

The brake 6 is connected to a control valve 38. The control valve 38 is a solenoid valve that operates based on a control signal transmitted from the controller 60. The control valve 38 is supplied with hydraulic fluid delivered from the hydraulic pump 33. The controller 60 electrically controls a switching position and an opening of the control valve 38 and accordingly causes the brake 6 to operate to brake the vehicle body 3.

The controller 60 electrically controls a switching position (an opening) of the control valve 37 and controls driving of the transmission 5. The transmission 5 transmits the driving force of the prime mover 4 to the traveling devices 7. Accordingly, the traveling devices 7 operate and cause the vehicle body 3 to travel forward and backward. For example, in a case where the working device 2 performs ground work or the like, the transmission 5 transmits the driving force of the prime mover 4 to the working device 2. As a result, an operating force of the working device 2 increases.

Furthermore, the controller 60 communicates with the working device 2 via the in-vehicle network N1. Specifically, the working device 2 includes a controller and a communicator (not illustrated). The controller 60 transmits a work command to the working device 2 via the in-vehicle network N1. When the work command is received by the communicator, the controller of the working device 2 controls the operation of each unit of the working device 2 based on the work command to perform agricultural work (ground work). Furthermore, the controller of the working device 2 transmits information or data indicating a working state or the like to the controller 60 via the in-vehicle network N1 through the communicator. The controller 60 detects the working state or the like of the working device 2 based on the information or data received from the working device 2 via the in-vehicle network N1.

Note that some working devices 2 do not include the controller and the communicator. The controller 60 does not perform communication with this type of working device 2 via the in-vehicle network N1, but, as described below, causes the raising/lowering device 8 to raise or lower the working device 2 and changes the position of the working device 2, thus controlling the operation of the working device 2 and detecting the working state or the like of the working device 2.

The steering device 29 includes a steering wheel 30, a steering shaft (rotary shaft) 31, and an assist mechanism (power steering mechanism) 32. The steering wheel 30 is provided inside the cabin 9 (FIG. 18). The steering shaft 31 rotates with rotation of the steering wheel 30. The assist mechanism 32 assists steering using the steering wheel 30.

The assist mechanism 32 includes a control valve 34 and a steering cylinder 35. The control valve 34 is a solenoid valve that operates based on a control signal transmitted from the controller 60. Specifically, the control valve 34 includes a three-position switching valve that can be switched by movement of a spool or the like. The control valve 34 is supplied with hydraulic fluid delivered from the hydraulic pump 33. The controller 60 electrically controls a switching position and an opening of the control valve 34 to adjust a hydraulic pressure to be supplied to the steering cylinder 35, thus extending or retracting the steering cylinder 35. The steering cylinder 35 is connected to knuckle arms 39 that change a direction of the front wheel 7F.

The control valve 34 can also be switched by steering of the steering shaft 31. Specifically, in response to the steering wheel 30 being operated, the steering shaft 31 rotates in accordance with a state of the operation, and the switching position and the opening of the control valve 34 are switched. The steering cylinder 35 extends or retracts leftward or rightward of the vehicle body 3 in accordance with the switching position and the opening of the control valve 34. The extension or retraction action of the steering cylinder 35 allows a steering direction of the front wheel 7F to be changed. Note that the steering device 29 described above is an example and is not limited to the configuration described above.

The vehicle body 3 of the agricultural machine 1 can be manually steered by a manual operation of the steering wheel 30 and automatically steered by the controller 60. Furthermore, the transmission 5 or the brake 6 operates in accordance with a manual operation of an accelerator member or a brake pedal (both not illustrated) provided in the manual operator 62, thus enabling the vehicle body 3 to travel and stop. Furthermore, the vehicle body 3 can automatically travel and stop in accordance with the control of the transmission 5 and the brake 6 by the controller 60. That is, the agricultural machine 1 can perform manual driving in which the user or the like (the driver) performs a traveling operation and a steering operation, automatic driving in which the controller 60 automatically performs traveling and steering, and autosteer driving (also referred to as automatic steering or semi-automatic driving.) in which the controller 60 automatically performs steering and the user or the like performs a traveling operation.

The raising/lowering device 8 is provided with a hydraulic cylinder as an actuator. The hydraulic cylinder is connected to a control valve 36. The control valve 36 is a solenoid valve that operates based on a control signal transmitted from the controller 60. The control valve 36 is supplied with hydraulic fluid delivered from the hydraulic pump 33. The controller 60 electrically controls a switching position or an opening of the control valve 36 to adjust a hydraulic pressure to be supplied to the hydraulic cylinder of the raising/lowering device 8, thus extending or retracting the hydraulic cylinder. The extension or retraction of the hydraulic cylinder of the raising/lowering device 8 allows the couplers 8g and 8h (FIG. 18) to rotate up and down, and the working device 2 coupled to the couplers 8g and 8h raises up and lowers down.

The position detector 40 illustrated in FIG. 1 includes a receiver 41 and an inertial measurement unit (IMU: Inertial Measurement Unit) 42. The receiver 41 receives satellite signals (positions of positioning satellites, transmission times, and the like) transmitted from a satellite positioning system (positioning satellites) such as GPS, GLONASS, BeiDou, Galileo, or Michibiki. The position detector 40 detects a current position (for example, latitude and longitude) based on the satellite signals received by the receiver 41. That is, the position detector 40 is a positioning device that detects a position of the agricultural machine 1 (the vehicle body 3) by using the satellite positioning system. The inertial measurement unit 42 includes an acceleration sensor, a gyroscope sensor, and the like. The inertial measurement unit 42 detects a roll angle, a pitch angle, a yaw angle, and the like of the vehicle body 3. The alarm device 63 includes a buzzer, a speaker, a warning lamp, or the like provided on the vehicle body 3. The alarm device 63 issues an alarm to the surroundings of the vehicle body 3 by sound or light.

The state detector 64 includes a sensor or the like installed in each unit of the agricultural machine 1 and the working device 2. The state detector 64 detects operating states (states of driving and stopping, operation positions, and the like) of the units of the agricultural machine 1, such as the transmission 5, the brake 6, the traveling devices 7, the raising/lowering device 8, the steering device 29, and the manual operator 62, based on output signals from the sensors or the like. The state detector 64 further detects an operating state of the working device 2 based on the output signals from the sensors or the like.

The state detector 64 further includes a target object detector 64a, a laser sensor such as LiDAR, an ultrasonic sensor, a camera, and the like. The laser sensor, the ultrasonic sensor, the camera, and the like are installed in a front portion, the rear portion, and left and right side portions of the vehicle body 3. The target object detector 64a detects the presence or absence of a target object around the agricultural machine 1 and the working device 2, distances to the target object, and the like, from an output signal from the laser sensor or the ultrasonic sensor. Furthermore, the target object detector 64a detects the presence or absence of a target object of the agricultural machine 1 and the working device 2 from a captured image of the surroundings of the agricultural machine 1 and the working device 2 captured by the camera. That is, the state detector 64 detects a state of the surroundings of the agricultural machine 1 by the laser sensor, the ultrasonic sensor, the camera, and the like.

The agricultural work assistance device 50 includes, for example, a mobile tablet terminal or the like. The agricultural work assistance device 50 is mounted inside the cabin 9 of the agricultural machine 1, for example, and is attachable to and detachable from the agricultural machine 1. That is, the agricultural machine 1 includes the agricultural work assistance device 50. The agricultural work assistance device 50 can also be detached from the agricultural machine 1.

The agricultural work assistance device 50 includes a controller 51, a display operation interface 52, a storing unit (memory and/or storage) 53, and a communicator 54. The controller 51 is a processor of the agricultural work assistance device 50, and includes a CPU and an internal memory. The internal memory of the controller 51 includes a volatile memory and a nonvolatile memory.

The display operation interface 52 includes a touch panel display, and displays (outputs) various kinds of information on a screen. Furthermore, the display operation interface 52 displays predetermined information on a screen to notify the user or the like of the information. That is, the display operation interface 52 outputs a notification (screen) including the predetermined information. An operator, such as the user, performs a predetermined operation on a display screen of the display operation interface 52, thus inputting various kinds of information or instructions. The display operation interface 52 is a display, an input interface (input, input device), and an output interface (output, output device) of the agricultural work assistance device 50. That is, the display operation interface 52 is a user interface. Instead of the display operation interface 52, an independent display, input interface, and output interface may be provided in the agricultural work assistance device 50. Additionally or alternatively, a speaker included in the alarm device 63 of the agricultural machine 1 may be used as an output interface to output predetermined information by voice, thus notifying the user of the information.

The storing unit 53 includes a nonvolatile memory or the like. In the storing unit 53, information or data to assist the agricultural machine 1 in traveling and working is stored in a readable and writable manner. The controller 51 controls each unit of the agricultural work assistance device 50 based on a software program, control data, and the like stored in the storing unit 53 or the internal memory. The communicator 54 includes a communication interface for connecting to the in-vehicle network N1. The controller 51 communicates with the controller 60, the manual operator 62, the position detector 40, the alarm device 63, the state detector 64, and the working device 2 via the in-vehicle network N1 through the communicator 54. Furthermore, the communicator 54 can communicate with an external device such as a server via the Internet or the like. The communicator 54 is an input interface (input, input device) and an output interface (output, output device) that input and output (transmit and receive) information, data, and instructions to and from the controller 60 of the agricultural machine 1.

Agricultural field information indicating an agricultural field, machine body information indicating the agricultural machine 1, device information indicating the working device 2, work information of agricultural work performed with the working device 2 while the agricultural machine 1 is caused to travel in the agricultural field, and the like are input to the agricultural work assistance device 50 by the display operation interface 52 or the communicator 54 and stored in the storing unit 53 or the internal memory of the controller 51. On the basis of at least the agricultural field information, the device information, and the work information, the controller 51 creates, on an agricultural field map indicating the agricultural field, a plurality of travel lines along which the agricultural machine 1 is caused to travel to perform agricultural work with the working device 2.

The agricultural field information includes information such as identification information (ID), a position (coordinates), an outline, and an area of the agricultural field. The device information of the working device 2 includes specifications (including dimensions, performance, functions, identification information, and the like) of the working device 2 and information related to a manual operation of the working device 2. The work information includes a category of corresponding agricultural work, a working condition under which the agricultural machine 1 and the working device 2 perform the corresponding agricultural work, a work plan, a work history, and the like. The working condition includes a working direction, a headland width, and the like. The work plan includes the travel line(s) of the agricultural machine 1, a travel route in which the plurality of travel lines are connected into a single line, a scheduled work position, and the like. The work history includes an actual work position or the like at which the agricultural work is performed by the agricultural machine 1 and the working device 2. The machine body information of the agricultural machine 1 includes information indicating specifications (including dimensions, performance, functions, identification information, and the like) of the agricultural machine 1. The machine body information of the agricultural machine 1 is also stored in a memory provided inside the controller 60.

When creating the travel lines of the agricultural machine 1, the controller 51 identifies specifications (variable state, variable range, and the like) of a changeable working width of the working device 2 and a predetermined first working width of the working device 2 based on, for example, the device information of the working device 2, and creates one or more first travel lines of the agricultural machine 1 for performing agricultural work with the first working width on the agricultural field map. When a remainder area having a width narrower than the first working width by a predetermined value or more is generated on the agricultural field map even through the creation of the first travel lines, the controller 51 determines a second working width of the working device 2 corresponding to a width of the remainder area based on the specifications of the working width of the working device 2, and generates a second travel line of the agricultural machine 1 on the agricultural field map to perform agricultural work on the remainder area with the second working width.

The controller 51 displays the agricultural field map on the display operation interface 52. In so doing, for example, the controller 51 causes the display operation interface 52 to draw, on the agricultural field map, at least any one of a travel line and a work position of a plurality of types of agricultural work performed in cooperation in the agricultural field.

Furthermore, the controller 51 transmits the agricultural field information, the device information, the work information, and the like to the controller 60 of the agricultural machine 1 through the communicator 54. The controller 60 controls driving of the prime mover 4, the transmission 5, the brake 6, the steering device 29, the raising/lowering device 8, and the working device 2 based on the agricultural field information, the device information, the work information, the position of the agricultural machine 1 (the vehicle body 3) detected by the position detector 40, the detection result of the state detector 64, and the like, and executes automatic driving for performing agricultural work (ground work) on the agricultural field with the working device 2 while automatically performing traveling and steering of the agricultural machine 1 (the vehicle body 3).

In so doing, the controller 60 determines whether or not the manual operation of the working device 2 is required based on the pieces of information described above. Specifically, the device information of the working device 2 includes, as the information related to the manual operation, whether or not the manual operation is required and the content of the manual operation. The controller 60 determines whether or not the manual operation of the working device 2 is required based on the information related to the manual operation of the working device 2, the position of the agricultural machine 1 in the agricultural field, an operating state of the agricultural machine 1, the working state by the working device 2, and the like. Note that the information related to the manual operation of the working device 2 is set by, for example, the operator through the agricultural work assistance device 50. When determining that the manual operation of the working device 2 required, the controller 60 causes the display operation interface 52 or the like of the agricultural work assistance device 50 to output a notification indicating such, etc.

Furthermore, the controller 60 can also execute autosteer driving for performing agricultural work on the agricultural field with the working device 2 while letting the agricultural machine 1 (the vehicle body 3) travel manually and automatically steering the agricultural machine 1, based on the pieces of information described above. In the autosteer driving, in response to the driver of the agricultural machine 1 operating the accelerator member or the brake member included in the manual operator 62 (FIG. 1), a travel speed of the vehicle body 3 is changed according to the operation.

The traveling and steering of the agricultural machine 1 can also be performed by manual driving, and agricultural work can be performed with the working device 2 during travel by manual driving. The manual driving of the agricultural machine 1 means that the driver operates the accelerator member or the brake member of the manual operator 62 to change the travel speed of the vehicle body 3 and operates the steering wheel 30 (FIG. 1) to steer the vehicle body 3.

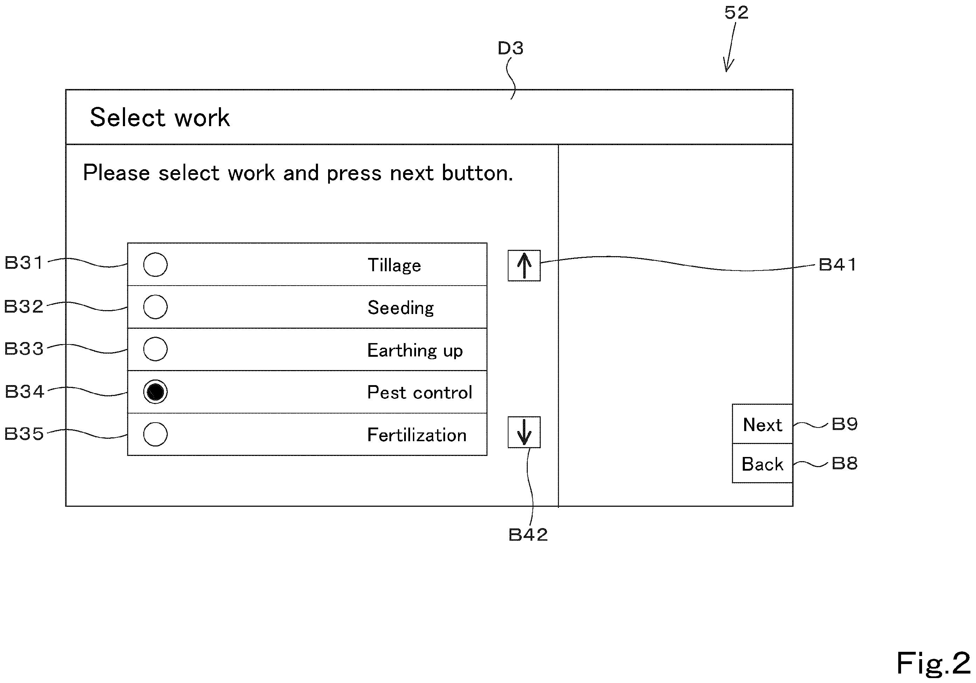

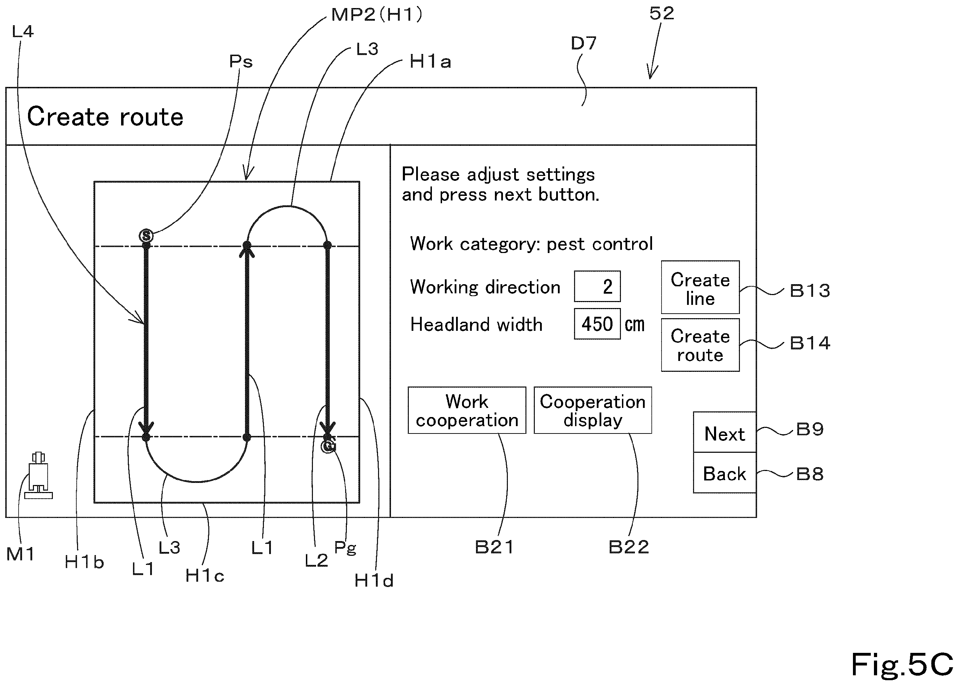

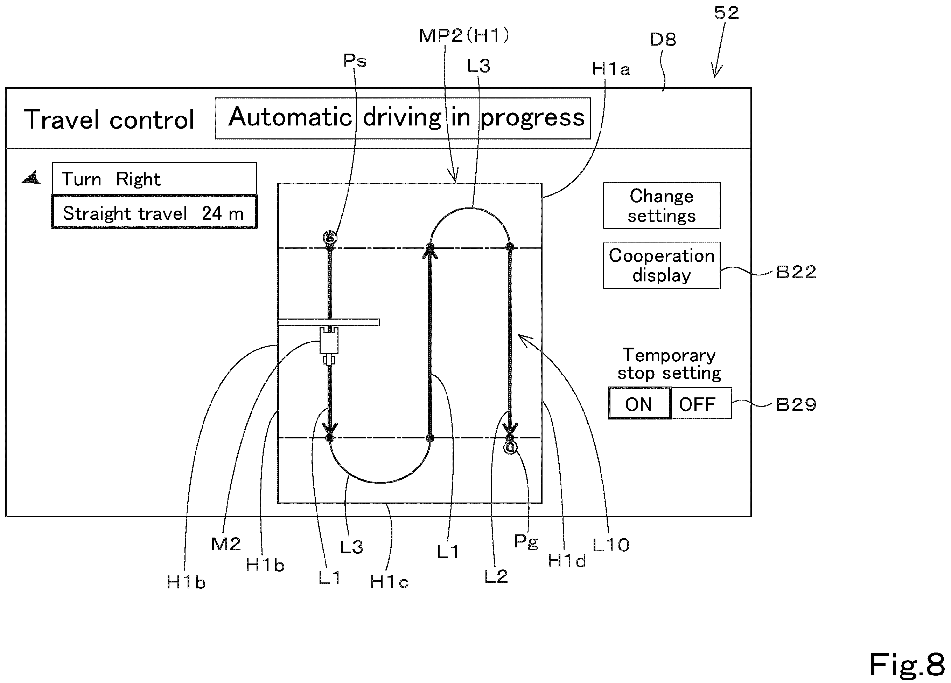

FIGS. 2 to 8 are diagrams illustrating one example of screens displayed on the display operation interface 52 of the agricultural work assistance device 50. In the present embodiment, the operator inputs device information indicating the working device 2 for outdoor cultivation (field cultivation) of crops, agricultural field information indicating the agricultural field, and work information of the agricultural work through screens D3 to D7 or the like of the display operation interface 52 in FIGS. 2 to 6. Then, based on the device information, the agricultural field information, the work information, and the like, the controller 51 of the agricultural work assistance device 50 creates a plurality of travel lines along which the agricultural machine 1 travels in order to perform agricultural work for outdoor cultivation with the working device 2. Furthermore, the controller 51 creates a travel route in which a plurality of travel lines are connected into a single line (FIG. 5C), and displays, on a screen D8 (FIG. 8) of the display operation interface 52, a state of the agricultural machine 1 traveling based on the travel route.

When the operator activates the agricultural work assistance device 50, the controller 51 causes the display operation interface 52 to display a home screen (not illustrated). The operator performs a predetermined input operation on the home screen through the display operation interface 52. Accordingly, the controller 51 causes the display operation interface 52 to display a work selection screen D3 illustrated in FIG. 2. Data of the work selection screen D3 and data of screens described below are stored in the storing unit 53. The controller 51 reads out data from the storing unit 53 as necessary and causes the display operation interface 52 to display a screen based on the data.

The operator selects a category of agricultural work to be performed with the agricultural machine 1 and the working device 2 on the work selection screen D3. In response to the operator operating (tapping) one of work keys B31 to B35, agricultural work corresponding to the operated one of the operation keys B31 to B35 is selected. The example in FIG. 2 illustrates a state in which pest control work is selected.

On the work selection screen D3 in FIG. 2, tillage work, seeding work, earthing up work, pest control work, and fertilization work are exemplified as agricultural work for outdoor cultivation of crops, but these do not imply any limitation. In response to the operator operating arrow keys B41 and B42, the controller 51 causes other agricultural work not displayed in FIG. 2, such as transplanting work and harvesting work, to be displayed on the work selection screen D3. Note that the seeding work and the transplanting work are examples of planting work for planting materials such as seeds or seedlings (seed potatoes in the case of potatoes) of crops in an agricultural field.

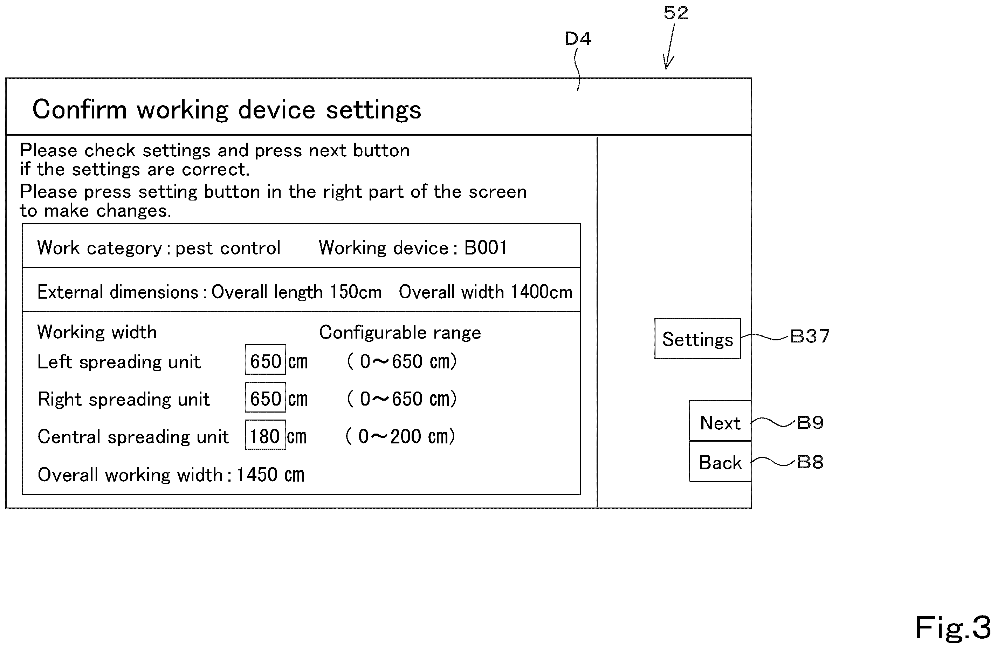

In response to the operator operating one of the work keys B31 to B35 and then operating a next key B9 on the work selection screen D3, the controller 51 determines that the agricultural work corresponding to the operated work key has been designated as target agricultural work, and stores work designation information indicating the designated target agricultural work in the internal memory or the storing unit 53. Furthermore, the controller 51 causes the display operation interface 52 to display a working device setting confirmation screen (hereinafter, simply referred to as a "device setting screen") D4 illustrated in FIG. 3. Note that in response to the operator operating a back key B8, the controller 51 causes the display operation interface 52 to display the previous screen. (The same applies to the following screens D4 to D7)

The operator inputs and confirms the device information of the working device 2 on the device setting screen D4. In the example in FIG. 3, the controller 51 displays, on the device setting screen D4, identification information and dimension information of the spreader 2B for the currently set pest control work as the device information of the working device 2. The dimension information includes an overall width, an overall length, and a working width of the spreader 2B. The working width includes respective working widths of a left spreading unit, a right spreading unit, and a central spreading unit, and an overall working width indicating the working width of the entire spreader 2B.

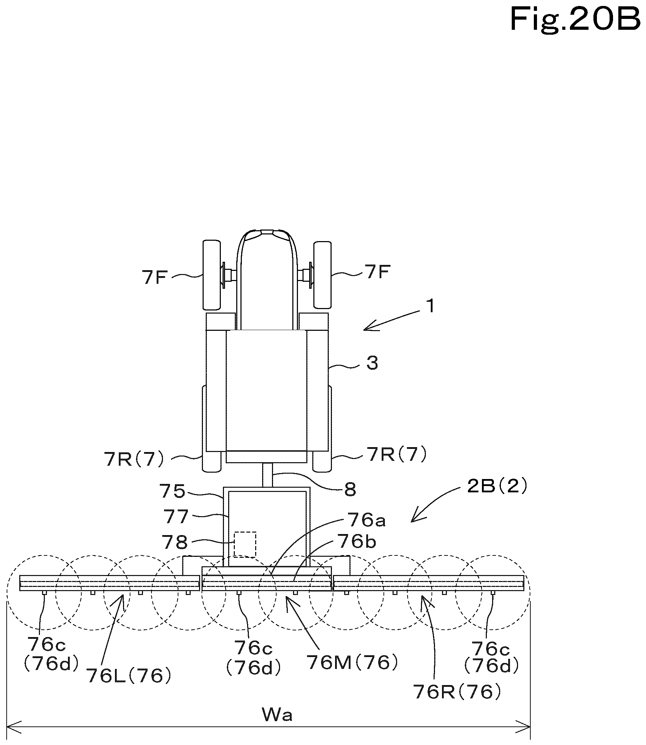

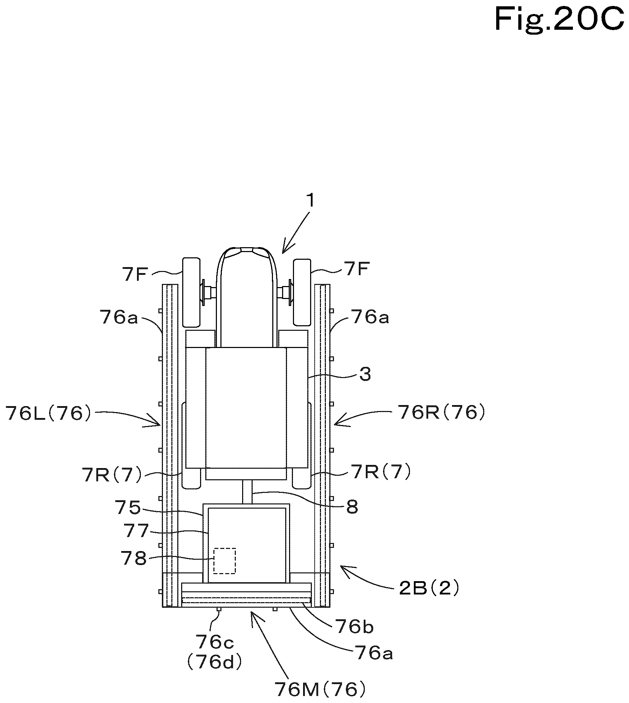

As illustrated in FIG. 20A, the spreader 2B includes the three spreading units 76: the left spreading unit 76L, the right spreading unit 76R, and a central spreading unit 76M. Among them, the left spreading unit 76L and the right spreading unit 76R can be extended and retracted in the lateral width direction of the agricultural machine 1 (the vehicle body 3) by an actuator (not illustrated), as illustrated in FIGS. 20A and 20B. Furthermore, the left spreading unit 76L and the right spreading unit 76R can be changed by the actuator (not illustrated) between a state (working state) in which the left spreading unit 76L and the right spreading unit 76R protrude to the left and right of the agricultural machine 1 as illustrated in FIGS. 20A and 20B and a retracted state (non-working state) in which the left spreading unit 76L and the right spreading unit 76R do not protrude to the left and right of the agricultural machine 1 as illustrated in FIG. 20C.

In the example in FIGS. 20A to 20C, the left spreading unit 76L and the right spreading unit 76R are rotated in a horizontal plane by the actuator and are each changed to a protruding state in which the left spreading unit 76L and the right spreading unit 76R are extended in the left-right direction of the agricultural machine 1 and a retracted state in which the left spreading unit 76L and the right spreading unit 76R are extended in the front-rear direction of the agricultural machine 1. However, depending on the type of the spreader 2B, the left spreading unit 76L and the right spreading unit 76R may be rotated by the actuator in a vertical plane or in an inclined plane inclined at an acute angle with respect to the vertical plane, and may be each changed to the protruding state in which the left spreading unit 76L and the right spreading unit 76R are extended in the left-right direction of the agricultural machine 1 and a retracted state in which the left spreading unit 76L and the right spreading unit 76R are brought close to the center of the agricultural machine 1 or the spreader 2B. Additionally or alternatively, one spreading unit 76 of the left spreading unit 76L and the right spreading unit 76R may be brought into the protruding state, and the other spreading unit 76 may be brought into the retracted state.

In response to the user manually operating the spreader 2B by using the assist controller or the operation box to bring at least any one of the left spreading unit 76L and the right spreading unit 76R into the protruding state and turning on (drive state) the spreading unit 76 that is in the protruding state, the material (chemical agent) is spread through the spreading ports 76d of the nozzles 76c of the spreading unit 76 that is in the protruding state. Furthermore, in response to the user manually operating the spreader 2B by using the assist controller or the operation box to turn on the central spreading unit 76M, the material is spread through the spreading ports 76d of the nozzles 76c of the central spreading unit 76M.

Furthermore, in response to the user manually operating the spreader 2B by using the assist controller or the operation box to change a protrusion length of at least any one of the left spreading unit 76L and the right spreading unit 76R or to turn on (drive state) or off (stop state) each of the plurality of spreading units 76L, 76R, and 76M, a working width (the width of an area where the material is spread) Wa of the spreader 2B changes.

Furthermore, in response to the user manually operating the spreader 2B by using the assist controller or the operation box to turn on (open state in which the material can be spread) or off (closed state in which the certain material cannot be spread) each of the plurality of nozzles 76c included in each of the plurality of spreading units 76 (76L, 76R, and 76M), each of the working width Wa and a spreading position of the spreader 2B may change. Furthermore, in response to the user manually operating the spreader 2B by using the assist controller or the operation box to incline at least any one of the plurality of spreading units 76 in the front-rear direction or the up-down direction of the agricultural machine 1 by using the actuator to change a posture of the spreading unit 76, the working width Wa and the like of the spreader 2B may change.

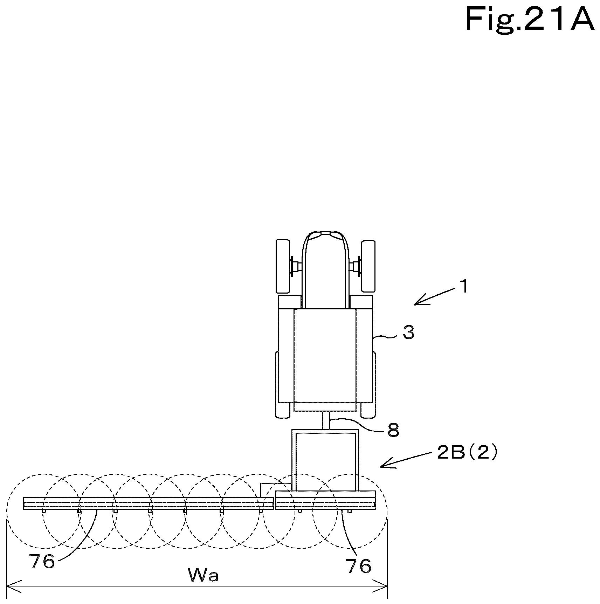

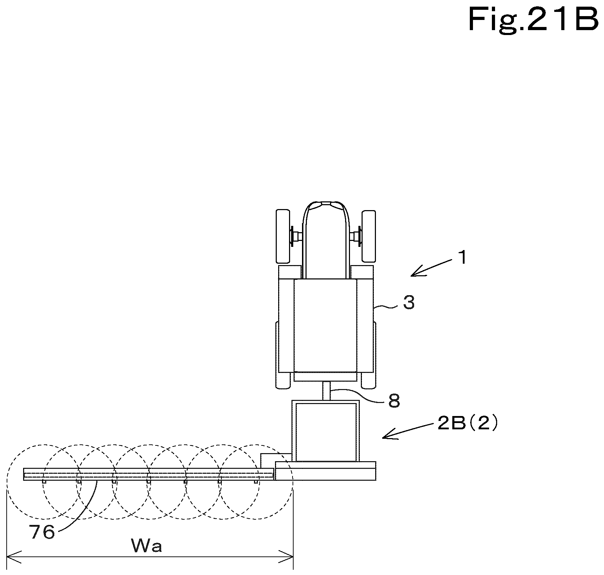

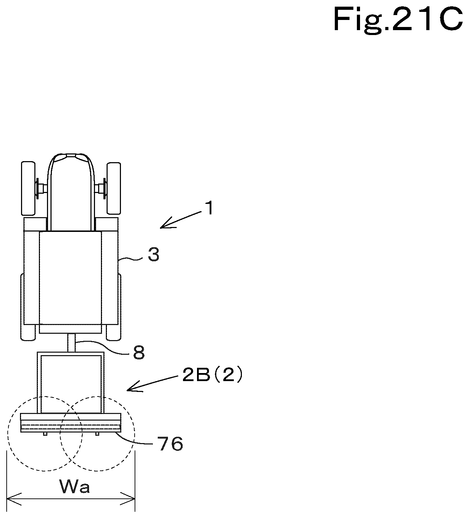

In addition to the spreader 2B described above, for example, as illustrated in FIG. 21A, a spreader 2B is also present that includes a plurality of spreading units 76 respectively positioned either to the left or to the right of the agricultural machine 1 and directly behind the agricultural machine 1. Furthermore, for example, as illustrated in FIG. 21B, a spreader 2B is also present that includes only a spreading unit 76 positioned on one of the left and right sides of the agricultural machine 1. Furthermore, for example, as illustrated for example in FIG. 21C, a spreader 2B is also present that includes only a spreading unit 76 positioned directly behind the agricultural machine 1. The spreader 2B illustrated in FIG. 20A can also be substantially changed to work manners in FIGS. 21A to 21C by appropriately turning on or off the plurality of spreading units 76.

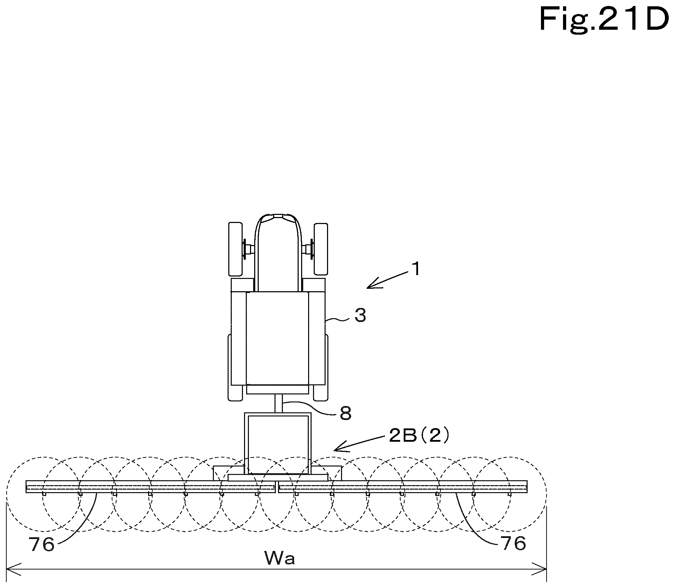

Furthermore, for example, as illustrated in FIG. 21D, a spreader 2B is also present that includes a plurality of spreading units 76 respectively extending leftward and rightward from the center in the width direction of the agricultural machine 1. Although not illustrated in the drawings, a spreader 2B is also present that includes a single spreading unit 76 extending leftward and/or rightward from the center in the width direction of the agricultural machine 1. As described above, the spreader 2B has specifications of various working states, but the specifications are not limited to those exemplified above.

When the operator (or user) operates a settings key B37 on the device setting screen D4 in FIG. 3, the identification information and the dimension information of the spreader 2B can be changed. For example, when the operator operates the settings key B37 and then changes (inputs) the identification information of the spreader 2B through the display operation interface 52, the controller 51 reads out the device information of the spreader 2B corresponding to the changed identification information from the storing unit 53, stores the device information in the internal memory, and causes the dimension information of the spreader 2B among them to be displayed on the device setting screen D4.

Furthermore, when the operator operates the settings key B37 and then appropriately changes (inputs) the overall width and the overall length of the spreader 2B or the respective working widths of the spreading units 76 (76L, 76R, and 76M) based on the specifications of the spreader 2B coupled to the agricultural machine 1, the controller 51 causes the display operation interface 52 to display the changed overall width, overall length, or working widths on the device setting screen D4. Furthermore, for example, the controller 51 calculates, as an overall working width, a value obtained by subtracting a predetermined overlap margin from a total value of the respective working widths of the spreading units 76, and causes the display operation interface 52 to display the overall working width on the device setting screen D4. In the example in FIG. 3, the working width of each of the left spreading unit 76L and the right spreading unit 76R is 650 cm, the working width of the central spreading unit 76M is 180 cm, and the overlap margin of the working width of each of the left spreading unit 76L and the right spreading unit 76R with respect to the working width of the central spreading unit 76M is 15 cm. Thus, the controller 51 subtracts the both overlap margins from 1480 cm, which is the total value of the respective working widths of the spreading units 76, and calculates an overall working width of 1450 cm (overall working width = 650 cm + 650 cm + 180 cm - 15 cm - 15 cm = 1450 cm). As another example, the controller 51 may calculate the total value of the respective working widths of the spreading units 76 as the overall working width.

In the above description, a case where the operator inputs and changes the device information of the working device 2 (the spreader 2B) for the pest control work on the device setting screen D4 has been described as an example. However, device information of the working device 2 for other agricultural work can also be input and changed on the device setting screen D4. The storing unit 53 also stores device information of the working device 2 for other agricultural work other than the working device 2 for the pest control work illustrated in FIG. 3. The controller 51 determines, in accordance with agricultural work selected on the work selection screen D3 in FIG. 2, the working device 2 for the agricultural work, reads out the device information of the working device 2 from the storing unit 53, and causes the device information to be displayed on the device setting screen D4 in FIG. 3. The storing unit 53 also stores machine body information of one or more agricultural machines 1 registered in advance.

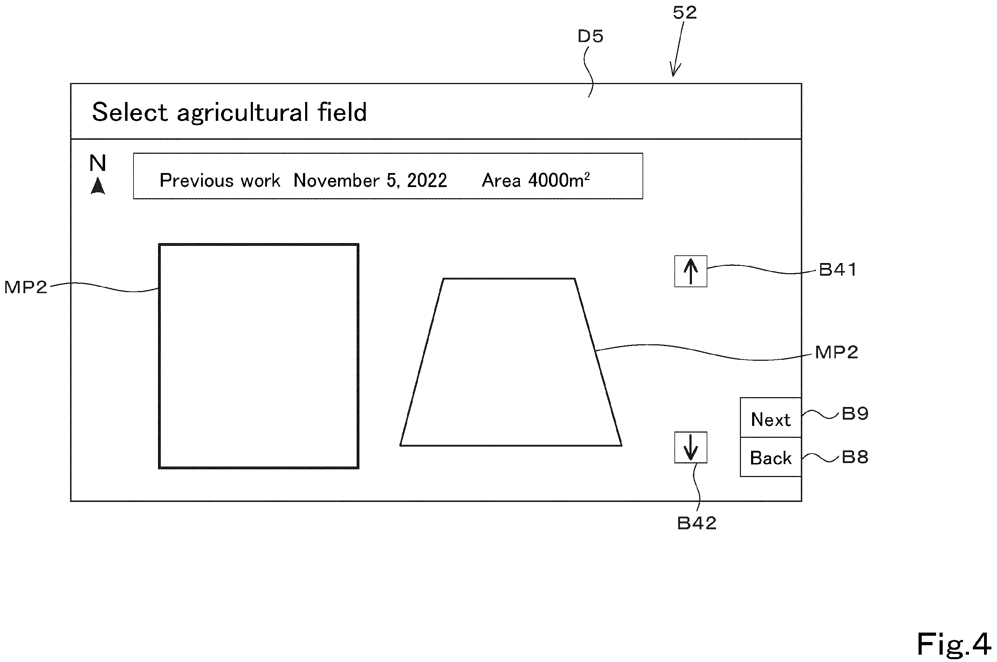

When the operator confirms the content displayed on the device setting screen D4 and operates the next key B9, the controller 51 stores the device information of the working device 2 displayed on the device setting screen D4 in the internal memory or the storing unit 53, and causes the display operation interface 52 to display an agricultural field selection screen D5 illustrated in FIG. 4.

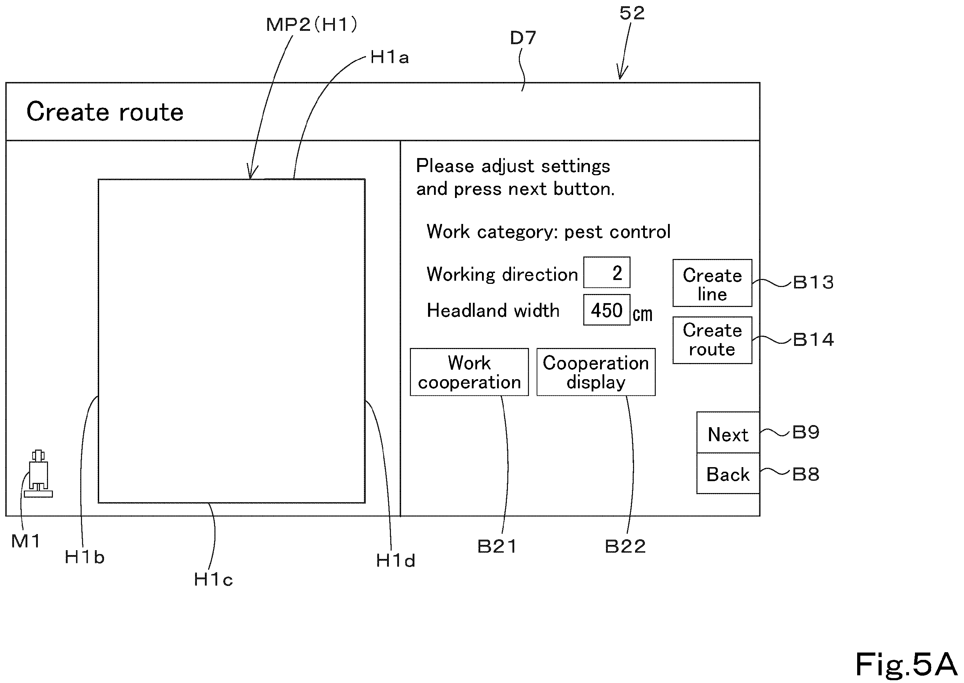

On the agricultural field selection screen D5, the operator selects an agricultural field map MP2 from among agricultural field maps MP2 indicating one or more agricultural fields registered in advance in the storing unit 53. When the operator selects any agricultural field map MP2, the controller 51 causes the selected agricultural field map MP2 to be displayed in a display form different from that of the other agricultural field maps MP2. In FIG. 4, the selected agricultural field map MP2 is surrounded by a thick line frame. When the operator selects the next key B9 in a state where any agricultural field map MP2 is selected, the controller 51 reads out agricultural field information including the selected agricultural field map MP2 from the storing unit 53, stores the agricultural field information in the internal memory, and causes the display operation interface 52 to display a route creation screen D7 illustrated in FIG. 5A.

The route creation screen D7 displays the agricultural field map MP2 selected on the agricultural field selection screen D5, an agricultural machine mark K1, various input fields, keys, and the like. The operator inputs a working condition on the route creation screen D7.

In the example in FIG. 5A, the operator inputs or changes the working direction and the headland width as working conditions.

The working direction is a direction in which work is performed with the working device 2 while the agricultural machine 1 is reciprocated in a straight line in an agricultural field. The operator inputs, as the working direction, any one of directions parallel to a plurality of agricultural field edges H1a to H1e of an outline H1 of the agricultural field (the agricultural field map MP2). Specifically, in response to the operator inputting a predetermined numerical value (for example, "1", "2", ...) in a numerical value input field for the working direction, an agricultural field edge corresponding to the numerical value is designated as a reference side, and a direction parallel to the reference side is input as the working direction. In the agricultural field map MP2 having a rectangular shape illustrated in FIG. 5A, any one of the agricultural field edges H1a to H1e is designated as the reference side, and a vertical direction or a horizontal direction parallel to the reference side can be input as the working direction. The headland width refers to a width of a headland provided in an end portion of an agricultural field (a width parallel to the working direction). A numerical value greater than "0" is input as the headland width.

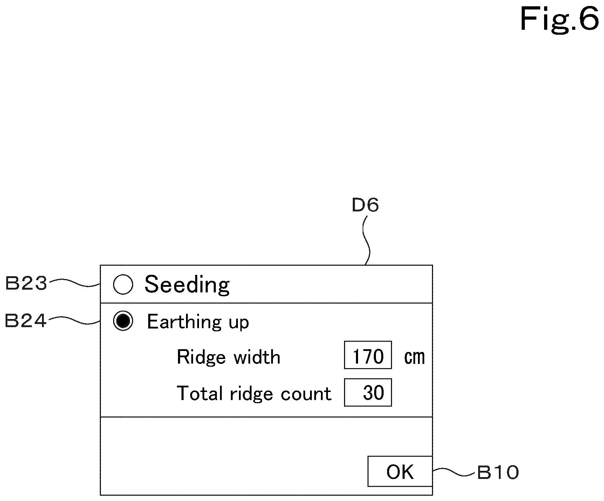

When the operator operates a work cooperation key B21, the controller 51 causes the display operation interface 52 to display a work cooperation screen D6 illustrated in FIG. 6. In so doing, the controller 51 may cause the work cooperation screen D6 to be displayed on the device setting screen D4 in a pop-up manner, or may cause the display operation interface 52 to display the work cooperation screen D6 instead of the device setting screen D4. The work cooperation screen D6 displays other agricultural work that can cooperate with the target agricultural work selected on the work selection screen D3 in FIG. 2. In the present example, since the pest control work is designated as the target agricultural work on the work selection screen D3, the controller 51 identifies the seeding work and the earthing up work as agricultural work that can cooperate with the pest control work, and causes a seeding setting box B23 and an earthing up setting box B24 to be displayed on the work cooperation screen D6 such that the seeding setting box B23 and the earthing up setting box B24 can be selectively designated. Note that the controller 51 may cause a setting box corresponding to any one of the seeding work and the earthing up work to be displayed on the work cooperation screen D6 as agricultural work that can cooperate with the pest control work.

As illustrated in FIG. 6, when the operator selects (taps) the earthing up setting box B24, the earthing up work is designated as cooperative agricultural work, and the controller 51 causes work information of the earthing up work stored in the storing unit 53 in advance to be displayed in the earthing up setting box B24. The work information of the earthing up work includes ridge information such as a ridge width and a total ridge count of the plurality of ridges Ua to be formed in the agricultural field through the earthing up work.

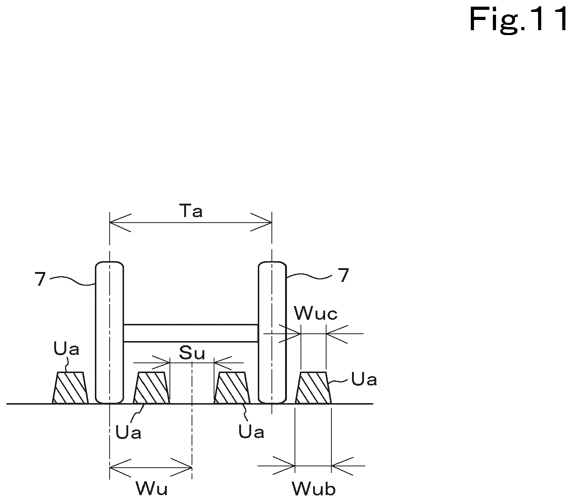

The total ridge count refers to the number of ridges Ua to be formed in the agricultural field. The ridge width refers to, for example, as illustrated in FIG. 11, a width Wu of a location of soil for forming one ridge Ua in the agricultural field. That is, the ridge width Wu is a total value of a ridge bottom width Wub indicating a width of the ridge Ua itself and a ridge spacing Su indicating a spacing between the bottoms of adjacent ridges Ua (Wu = Wub + Su). Note that a ridge shoulder width Wuc indicating a width of a crest of the ridge Ua may be adopted as the width of the ridge Ua itself and a spacing between the crests of adjacent ridges Ua may be adopted as the ridge spacing.

In a case where the ridge information has been stored in the storing unit 53, the controller 51 causes set values of the ridge width Wu and the total ridge count included in the ridge information to be displayed in numerical value input fields for the ridge width Wu and the total ridge count in the earthing up setting box B24 (FIG. 6). In a case where none of the ridges Ua has yet been formed in the agricultural field corresponding to the agricultural field map MP2 with the respective set values displayed in the numerical value input fields for the ridge width Wu and the total ridge count in the earthing up setting box B24 (in a case where the earthing up work has not been performed), the operator can change each of the set values by operating the display operation interface 52. On the other hand, in a case where the ridges Ua have already been formed in the agricultural field corresponding to the agricultural field map MP2 with the respective set values displayed in the numerical value input fields for the ridge width Wu and the total ridge count in the earthing up setting box B24 (in a case where the earthing up work has been performed), the controller 51 displays the set values in the earthing up setting box B24 such that the set values cannot be changed.

Note that the work information of the earthing up work may be work information set by the agricultural work assistance device 50 and stored in the storing unit 53, or may be work information received by the controller 51 from an external device such as a server through the communicator 54 and stored in the storing unit 53. Additionally or alternatively, the work information of the earthing up work may be work information of earthing up work that has not yet been performed, or may be work information of earthing up work that has already been performed.

In a case where the work information of the earthing up work has not been stored in the storing unit 53, the controller 51 causes only the item names of the ridge width Wu and the total ridge count to be displayed in the earthing up setting box B24. In this case, the controller 51 does not accept numerical values input to the numerical value input fields for the ridge width Wu and the total ridge count in the earthing up setting box B24, and may output (display) a message (notification) indicating that the earthing up work and the pest control work cannot cooperate with each other to the work cooperation screen D6 or the like (not illustrated). Alternatively, the operator may be allowed to input respective numerical values to the numerical value input fields for the ridge width Wu and the total ridge count in the earthing up setting box B24 by operating the display operation interface 52, and the controller 51 may accept the input numerical values.

In a case where the operator selects the seeding setting box B23, the seeding work is designated as cooperative agricultural work, and the controller 51 causes work information of the seeding work stored in the storing unit 53 in advance to be displayed in the seeding setting box B23 (not illustrated). The work information of the seeding work may also include ridge information such as the ridge width Wu and the total ridge count of ridges including a work position of the seeding work. Alternatively, instead of the ridge information, the controller 51 may cause seeding information such as a seeding position or a seeding row to be displayed in the seeding setting box B23. Additionally or alternatively, as in the case of the earthing up setting box B24 described above, the controller 51 may cause items and set values in the work information of the seeding work to be displayed in the seeding setting box B23, and the operator may change and input the work information of the seeding work.

When the operator operates an OK key B10 on the work cooperation screen D6, the controller 51 causes the work designation information indicating the cooperative agricultural work designated on the work cooperation screen D6 and the displayed or input work information of the cooperative agricultural work to be stored in the storing unit 53, and causes the display operation interface 52 to display the route creation screen D7 in FIG. 5A. In so doing, the controller 51 causes the working direction and headland width set for the cooperative agricultural work to be displayed in input fields for the working direction and the headland width on the route creation screen D7. Then, when the operator operates a create line key B13 on the route creation screen D7, the controller 51 causes set content on the route creation screen D7 and the like to be stored in the internal memory, and creates, on the agricultural field map MP2, a travel line along which the agricultural machine 1 travels in order to perform the target agricultural work with the working device 2 in the agricultural field.

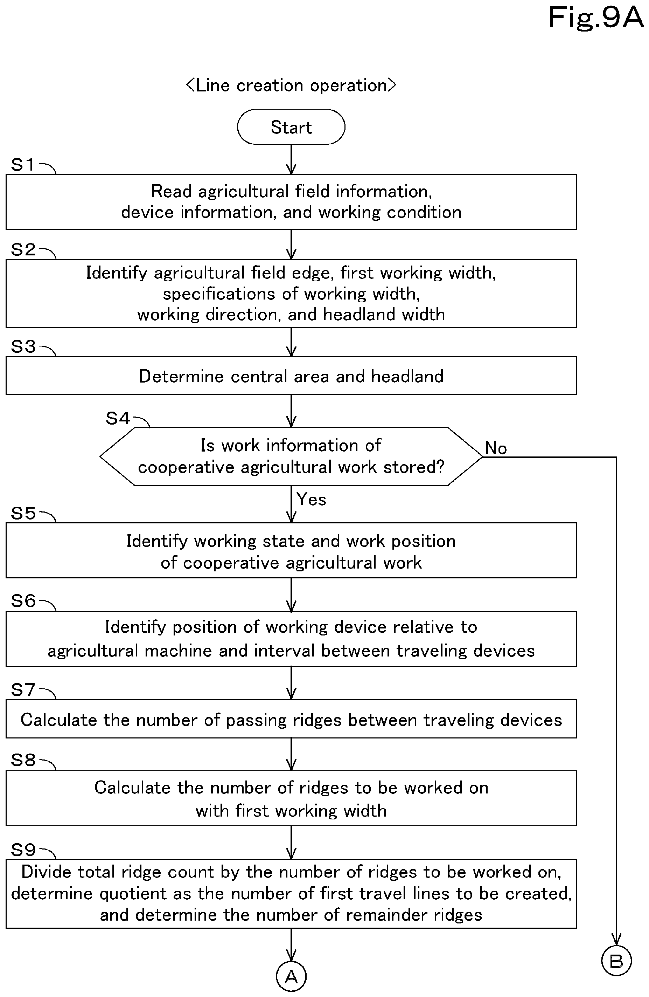

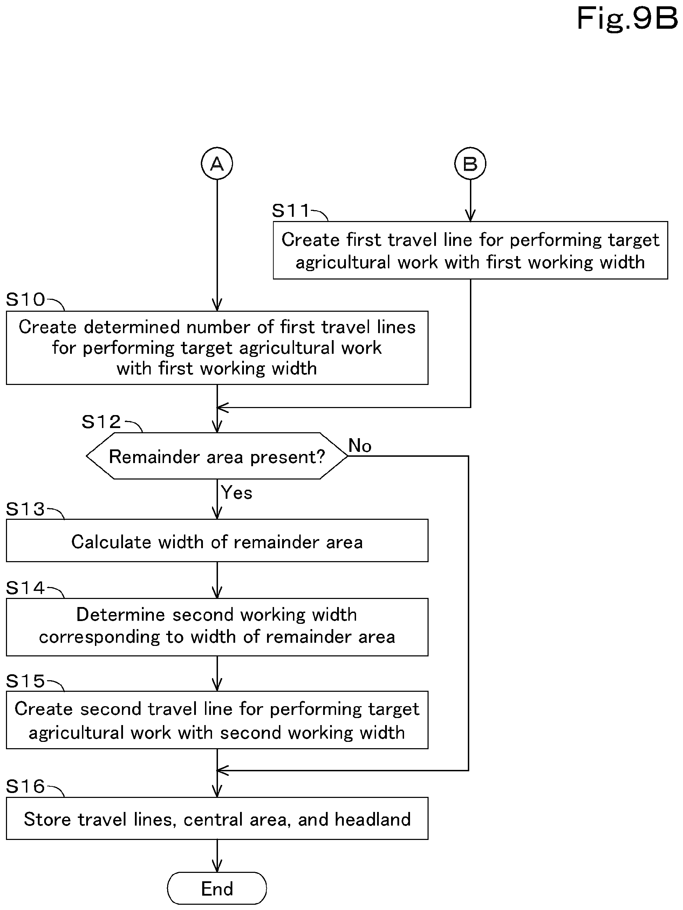

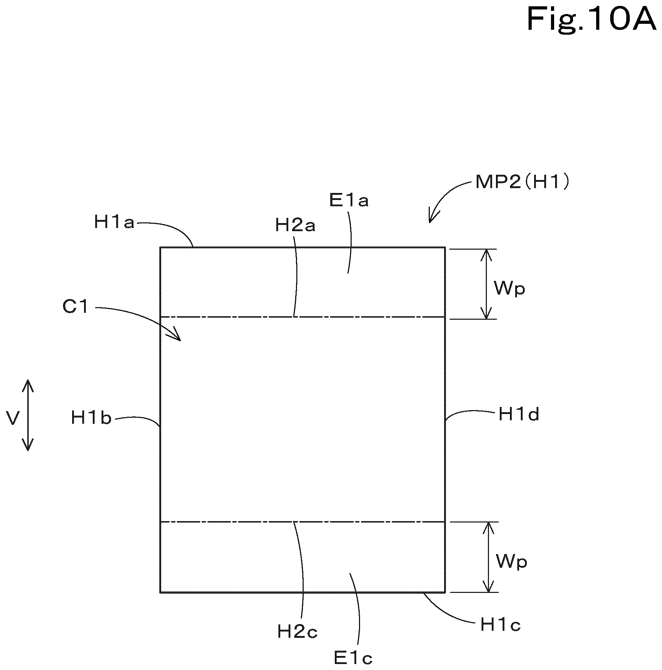

FIGS. 9A and 9B are a flowchart illustrating a travel line creation operation of the agricultural work assistance device 50. Each step in FIGS. 9A and 9B is executed by the controller 51. FIGS. 10A to 10D are diagrams illustrating a process of creating a travel line on the agricultural field map MP2. Hereinafter, a case where a travel line along which the agricultural machine 1 travels is created in order to perform the pest control work as the target agricultural work using the spreader 2B will be described as an example.

As described above, when the operator inputs numerical values and selection content to the respective setting items on the route creation screen D7 in FIG. 5A and then operates the create line key B13, the controller 51 causes the numerical values input to the respective setting items to be temporarily stored in the internal memory, and then reads the agricultural field information, the device information of the working device 2, and the work information of the target agricultural work stored in the internal memory (S1 in FIG. 9A).

Then, the controller 51 identifies the plurality of agricultural field edges H1a to H1e indicating the outline H1 of the agricultural field from the agricultural field information, identifies a first working width Wa1 serving as the basis of the spreader 2B and specifications of the changeable working width Wa of the spreader 2B from the device information, and identifies the working direction and the headland width from the work information (S2). The first working width Wa1 of the spreader 2B identified at this time is the overall working width of the spreader 2B set on the device setting screen D4 in FIG. 3. The specifications of the changeable working width Wa of the spreader 2B include the spreading units 76 (76L, 76R, and 76M) provided in the spreader 2B, change forms (the number of spreading units 76 installed, installation states, postures, and the like) of the spreading units 76, ranges (ranges from the minimum values to the maximum values) within which the working widths of the spreading units 76 can be changed, and the like.

For example, as illustrated in FIG. 10A, the controller 51 creates, in the agricultural field map MP2, offset sides H2a and H2c parallel to the agricultural field edges H1a and H1c at positions where the agricultural field edges H1a and H1c not parallel to a working direction V are offset inward of the agricultural field map MP2 by a headland width Wp. Then, the controller 51 determines a central area C1 surrounded by the offset sides H2a and H2c and the other agricultural field edges H1b and H1d, and determines portions other than the central area C1 in the agricultural field map MP2 as headlands E1a and E1c (S3 in FIG. 9A). That is, the headland E1a is an area surrounded by the agricultural field edges H1a, H1b, and H1d and the offset side H2a, and the headland E1c is an area surrounded by the agricultural field edges H1c, H1b, and H1d and the offset side H2c.

As another example, the controller 51 may also offset the agricultural field edges H1b and H1d (FIG. 10A) parallel to the working direction V inward by the headland width Wp or a predetermined distance to create offset sides parallel to the agricultural field edges H1b and H1d, and determine an area surrounded by the offset sides and the offset sides H2a and H2c to be a central area. In this case, headlands are respectively set between the central area and the agricultural field edges H1a to H1d.

Next, the controller 51 checks whether or not the work information of the cooperative agricultural work (for example, the earthing up work) that cooperates with the target agricultural work (the pest control work) for which a travel line is to be created is stored in the storing unit 53. If the work information of the cooperative agricultural work is stored in the storing unit 53 (S4 in FIG. 9A: YES), the controller 51 identifies the working state and the work position of the cooperative agricultural work from the work information of the cooperative agricultural work (S5). Specifically, at this time, the controller 51 identifies the ridge width Wu and the total ridge count of the ridges Ua formed through the earthing up work, which is the cooperative agricultural work, as the working state, and identifies ridge positions as work positions of the cooperative agricultural work based on the ridge width Wu, the total ridge count, and the agricultural field information (such as a central work area in the agricultural field). The ridge positions refer to positions of the plurality of ridges Ua to be formed in the agricultural field.

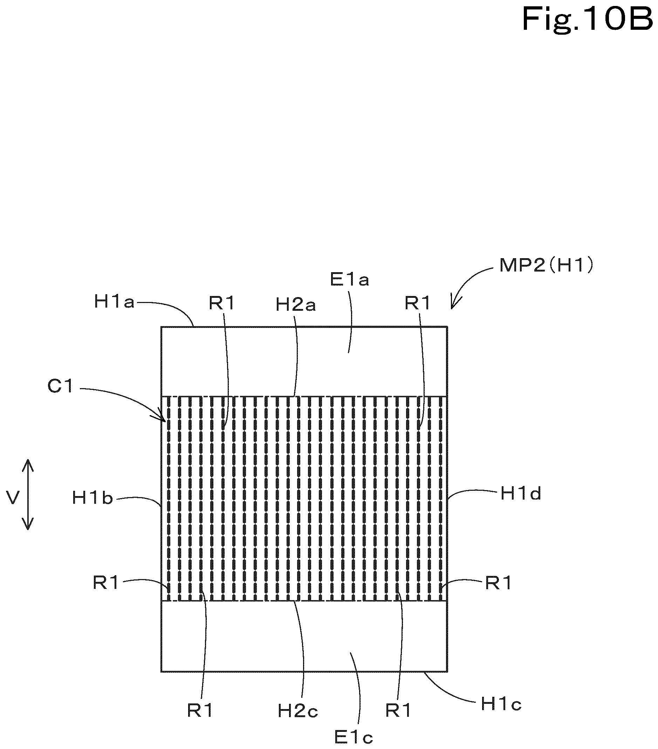

In FIG. 10B, a plurality of ridge positions R1 identified by the controller 51 are indicated by thick broken lines. The ridge positions R1 are straight lines parallel to the working direction V, and are also referred to as ridge lines R1. A width direction of the ridges Ua respectively corresponding to the plurality of ridge positions (ridge lines) R1 is a direction perpendicular to the working direction V.

As another example, the controller 51 may identify a work position (ridge position or the like) of the cooperative agricultural work based on the travel line included in the work information of the cooperative agricultural work (the travel line along which the working machine 1 travels in order to perform the cooperative agricultural work with the working device 2) and the device information of the working device 2 that performs the cooperative agricultural work. Alternatively, the controller 51 may cause a travelable line of the working machine 1 that does not perform the cooperative agricultural work (such as a ridge spacing line representing the ridge spacing Su where no ridge Ua is formed, as illustrated in FIG. 11) to be stored in the storing unit 53 in advance such that the travelable line is included in the work information of the cooperative agricultural work, and then identify a work position (ridge position or the like) of the cooperative agricultural work based on the travelable line.

Next, the controller 51 identifies a relative position of the working device 2 with respect to the vehicle body 3 of the agricultural machine 1 and an interval between the pair of left and right traveling devices 7 arranged in the width direction of the vehicle body 3 from machine information of the agricultural machine 1 and the device information of the working device 2 stored in the storing unit 53 (S6 in FIG. 9A). In so doing, for example, the controller 51 uses the position of the vehicle body 3 detected by the position detector 40 as a reference point, and identifies (calculates) a first distance from the reference point to the centers of the traveling devices 7 in the front-rear direction of the vehicle body 3 and a second distance from the reference point to the centers of the traveling devices 7 in the width direction of the vehicle body 3 as the relative position of the working device 2 with respect to the vehicle body 3. Furthermore, the controller 51 detects an interval between the front wheels 7F and an interval between the rear wheels 7R of the pair of left and right traveling devices 7 from the machine information of the agricultural machine 1, and identifies the narrower interval as an interval Ta between the traveling devices 7. Then, as illustrated in FIG. 11, the controller 51 calculates the number of passing ridges that are caused to pass between the traveling devices 7 based on the interval Ta between the traveling devices 7, the ridge positions R1, and the ridge width Wu (S7 in FIG. 9A).

Furthermore, based on the first working width Wa1, the ridge positions R1, and the ridge width Wu, the controller 51 calculates the number of ridges to be worked on included in the range in which the spreader 2B can simultaneously perform the agricultural work (the pest control work) with the first working width Wa1 (S8). Furthermore, the controller 51 divides the total ridge count by the number of ridges to be worked on, determines the quotient as the number of first travel lines to be created, and determines the number of remainder ridges (S9). Note that if the total ridge count divides evenly by the number of ridges to be worked on, the number of remainder ridges is "0".

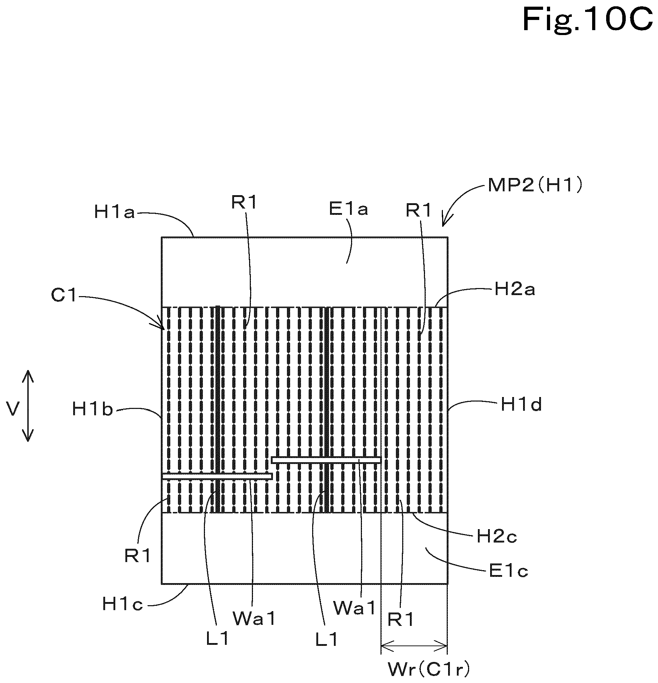

Next, as illustrated in FIG. 10C, the controller 51 creates, in the agricultural field map MP2, the determined number of first travel lines L1 for performing the target agricultural work with the first working width Wa1, based on the ridge positions R1 of the cooperative agricultural work (S10 in FIG. 9B). Specifically, for example, when a plurality of first travel lines L1 are to be created, the controller 51 first creates one first travel line L1 parallel to the working direction V and the ridge lines R1 at a corresponding position in the central area C1 away from one side of the central area C1 parallel to the working direction V illustrated in FIG. 10C by a distance Wa1/2, which is one half the first working width Wa1, over the plurality of offset sides H2a and H2c not parallel to the working direction V. Then, with reference to the one first travel line L1, the controller 51 creates first travel lines L1 parallel to the working direction V and the ridge lines R1 at intervals of the first working width Wa1 in the central area C1 over the offset sides H2a and H2c.

As illustrated in FIG. 10C, only through the creation of the first travel lines L1 in the central area C1, a remainder area C1r having a width Wr that is smaller than the first working width Wa1 by a predetermined value or more may be generated in an end portion of the central area C1. The predetermined value at this time is set to a value smaller than the first working width Wa1. When the remainder area C1r is generated in the end portion of the central area C1 (S12 in FIG. 9B: YES), the controller 51 calculates the width Wr of the remainder area C1r based on the number of remainder ridges, the ridge positions R1, and the ridge width Wu (S13). Note that depending on the working condition or the like, the remainder area C1 may be generated in a portion other than the end portion of the central area C1r.

Next, the controller 51 determines a second working width Wa2 of the working device 2 corresponding to the width Wr of the remainder area C1r based on the specifications of the working width Wa of the working device 2 (S14 in FIG. 9B). In so doing, the controller 51 determines at least one of (i) the spreading unit(s) 76 (76L, 76R, 76M) that match(es) the width Wr of the remainder area C1r or (ii) the spreading port(s) 76d, and determines the second working width Wa2 based on the at least one of the matching spreading unit(s) 76 or the spreading port(s) 76d. That is, the controller 51 determines the manner in which work is performed by the working device 2 to achieve the second working width Wa2 (spreading unit(s) effective for spreading among the plurality of spreading units 76L, 76R, and 76M, the protrusion length in the width direction, the posture, and the spreading position(s) (the spreading port(s) 76d) of the effective spreading unit(s)). Note that the second working width Wa2 is smaller than the first working width Wa1. The controller 51 stores the determined second working width Wa2 and work manner of the working device 2 in the storing unit 53 in association with each other.

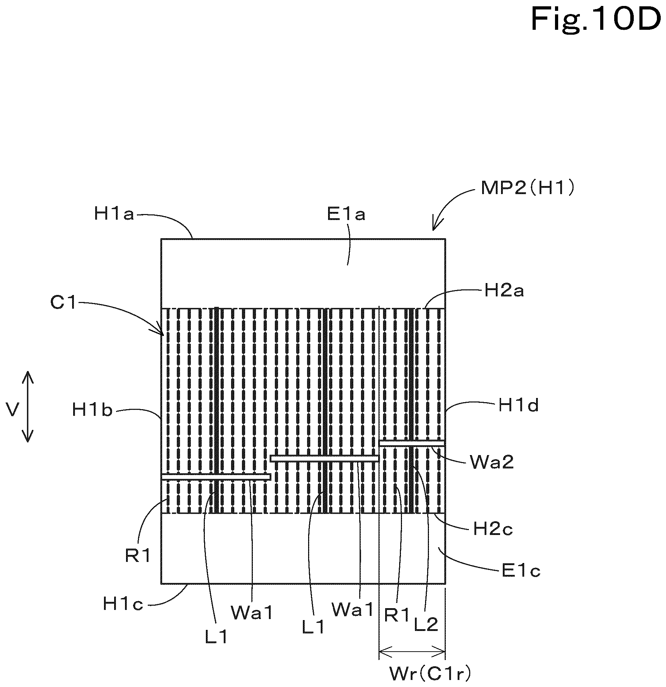

Next, as illustrated in FIG. 10D, the controller 51 creates, in the central area C1, a second travel line L2 for performing the agricultural work with the second working width Wa2 (S15 in FIG. 9B). In so doing, the controller 51 creates the second travel line L2, which is parallel to the working direction V and the ridge lines R1, in the central area C1 over the offset sides H2a and H2c based on a ridge position of the cooperative agricultural work in the remainder area C1r, the relative position of the working device 2 with respect to the vehicle body 3 of the agricultural machine 1, and the number of passing ridges.

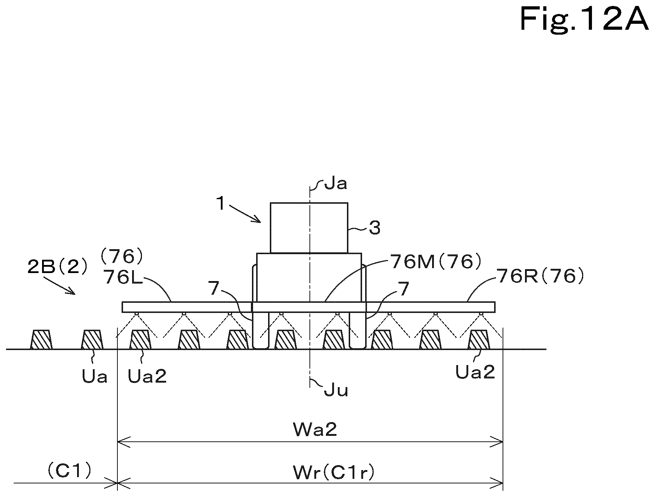

Specifically, for example, as illustrated in FIG. 12A, when a central axis Ja in the width direction of the agricultural machine 1 and a central axis Ja in the width direction of the spreader 2B (the working device 2) coincide with each other and the number of ridges located in the remainder area C1r is an even number like the number of passing ridges, a value obtained by subtracting the number of passing ridges from the number of ridges located in the remainder area C1r is also an even number. Thus, the controller 51 determines the second working width Wa2, which is substantially equal to the width Wr of the remainder area C1r, based on the fact that the value obtained by the subtraction is an even number. The controller 51 further determines the respective working widths of the spreading units 76L, 76R, and 76M and the spreading ports 76d through which the material is to be spread, such that the left spreading unit 76L, the right spreading unit 76R, and the central spreading unit 76M of the spreader 2B allow the pest control work to be carried out symmetrically, both leftward and rightward, on the ridges Ua2 located in the remainder area C1r. Then, the controller 51 makes the central axes Ja of the agricultural machine 1 and the working device 2 coincide with a center position Ju in an arrangement direction of the plurality of ridges Ua2 located in the remainder area C1r, and creates the second travel line L2 passing through the central axes Ja and the center position Ju in the remainder area C1r (FIG. 10D).

In this case, the central spreading unit 76M performs the pest control work on the ridges Ua2 passing between the pair of traveling devices 7. Each of the left spreading unit 76L and the right spreading unit 76R performs the pest control work on the ridges Ua2, the number of which is half (three) the number of ridges (six) obtained by subtracting the number of passing ridges (two) from the number of ridges (eight in the example in FIG. 12A) located in the remainder area C1r.

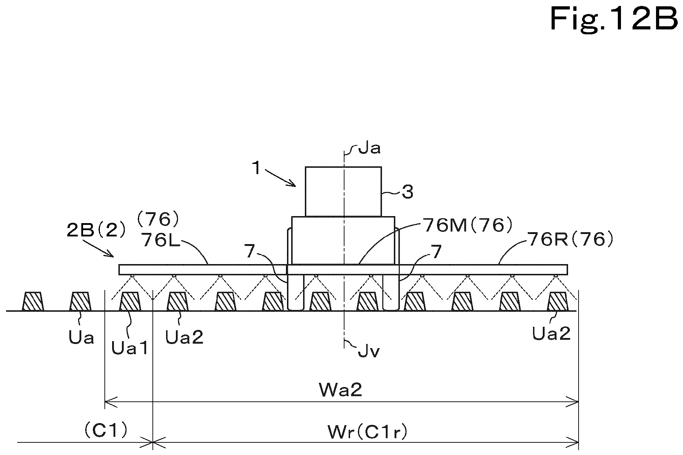

For example, when the number of ridges located in the remainder area C1r is an odd number unlike the number of passing ridges, a value obtained by subtracting the number of passing ridges from the number of ridges located in the remainder area C1r is also an odd number. Thus, for example, as illustrated in FIG. 12B, the controller 51 determines, as the second working width Wa2, a value obtained by adding the ridge width Wu to the width Wr of the remainder area C1r, based on the fact that the value obtained by the subtraction is an odd number. The controller 51 further determines the respective working widths of the spreading units 76L, 76R, and 76M and the spreading ports 76d through which the material is to be spread, such that the left spreading unit 76L, the right spreading unit 76R, and the central spreading unit 76M allow the pest control work to be carried out symmetrically, both leftward and rightward, on the ridges Ua2 located in the remainder area C1r and one ridge (ridge not located in the remainder area C1r) Ua1 adjacent to the ridges Ua2. Then, the controller 51 makes the central axes Ja of the agricultural machine 1 and the working device 2 (the spreader 2B) coincide with a center position Jv in an arrangement direction of the ridge Ua1 and the ridges Ua2, and creates the second travel line L2 passing through the central axes Ja and the center position Jv in the remainder area C1r.

Also in this case, the central spreading unit 76M performs the pest control work on the ridges Ua2 passing between the pair of traveling devices 7. Each of the left spreading unit 76L and the right spreading unit 76R performs the pest control work on the ridges Ua2 and Ua1, the number of which is half (four) the number of ridges (eight) obtained by subtracting the number of passing ridges (two) from the total number (ten) of the number of ridges located in the remainder area C1r (in the example in FIG. 12B, nine ridges Ua2 located in the remainder area C1r) and the number of adjacent ridges Ua1 (one), among the plurality of ridges Ua located in the central area C1.

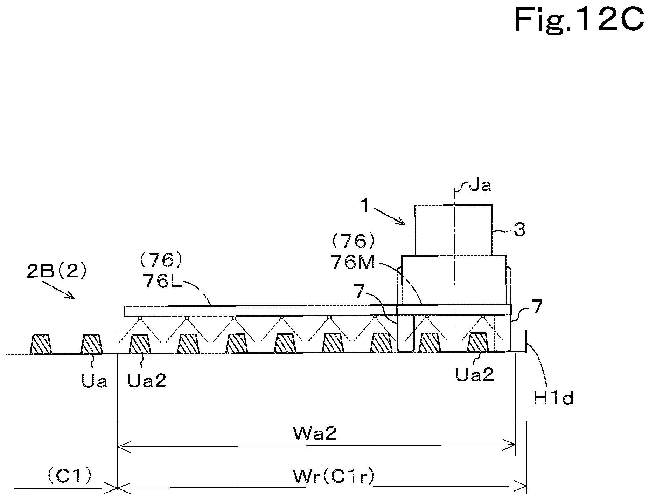

For example, when the number of ridges located in the remainder area C1r is less than or equal to the maximum number of working ridges (for example, ten) on which the pest control work can be performed by the left spreading unit 76L and the central spreading unit 76M, for example, as illustrated in FIG. 12C, the controller 51 determines the second working width Wa2, which is substantially equal to the width Wr of the remainder area C1r. The controller 51 further determines the respective working widths of the left spreading unit 76L and the central spreading unit 76M and the spreading ports 76d through which the material is to be spread, such that the left spreading unit 76L and the central spreading unit 76M of the spreader 2B allow the pest control work to be carried out on the ridges Ua2 located in the remainder area C1r. Then, the controller 51 positions the central axes Ja of the agricultural machine 1 and the spreader 2B between any two ridges Ua2, and creates the second travel line L2 passing through the central axes Ja in the remainder area C1r.

In this case, the central spreading unit 76M performs the pest control work on the ridges Ua2 passing between the pair of left and right traveling devices 7. The ridges Ua2, the number of which is equal to the number of ridges (six) obtained by subtracting the number of passing ridges (two) from the number of ridges located in the remainder area C1r (in the example in FIG. 12C, eight ridges Ua2 located in the remainder area C1r) are positioned leftward of the pair of traveling devices 7. Thus, the left spreading unit 76L performs the pest control work on the ridges Ua2 located leftward. Note that the controller 51 may create the second travel line L2 in the remainder area C1r such that the right spreading unit 76R, rather than the left spreading unit 76L, and the central spreading unit 76M allow the pest control work to be carried out on the ridges Ua2 located in the remainder area C1r.

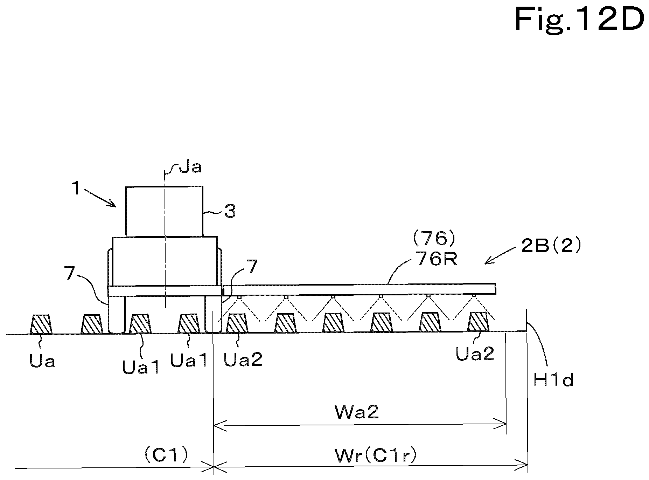

For example, when the number of ridges located in the remainder area C1r is less than or equal to the maximum number of working ridges (for example, eight) on which the pest control work can be performed only by the left spreading unit 76L, for example, as illustrated in FIG. 12D, the controller 51 determines the second working width Wa2, which is substantially equal to the width Wr of the remainder area C1r. The controller 51 further determines the working width of the left spreading unit 76L and the spreading ports 76d through which the material is to be spread, such that the left spreading unit 76L of the spreader 2B allows the pest control work to be carried out on the ridges Ua2 located in the remainder area C1r. Then, the controller 51 positions the central axes Ja of the agricultural machine 1 and the spreader 2B between two ridges Ua1 not located in the remainder area C1r, and creates the second travel line L2 passing through the central axes Ja in the central area C1.

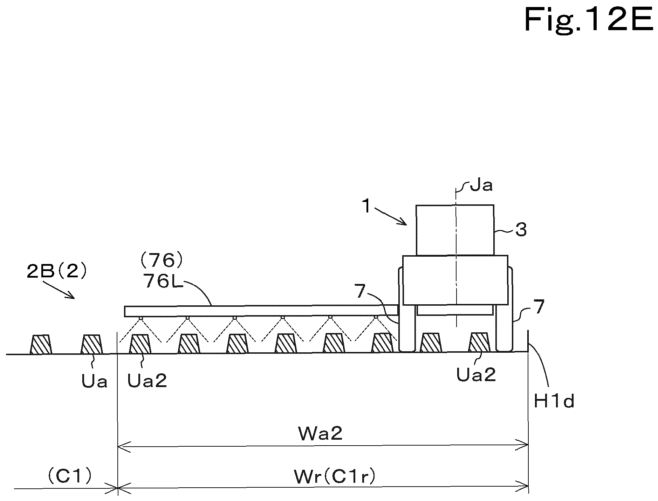

Alternatively, as illustrated in FIG. 12E, the controller 51 may position the central axes Ja of the agricultural machine 1 and the spreader 2B between ridges Ua2, the number of which is equal to the number of passing ridges (two) positioned near the agricultural field edge H1d parallel to the working direction V, among the ridges Ua2 located in the remainder area C1r, and create the second travel line L2 passing through the central axes Ja in the remainder area C1r. Additionally or alternatively, the controller 51 may exclude the ridges Ua2 passing between the pair of traveling devices 7 from the target of the pest control work to be performed by the spreader 2B, and perform the pest control work on the other ridges Ua2 using the left spreading unit 76L. In this case, the user may perform separate pest control work on the ridges Ua2 passing between the pair of traveling devices 7.

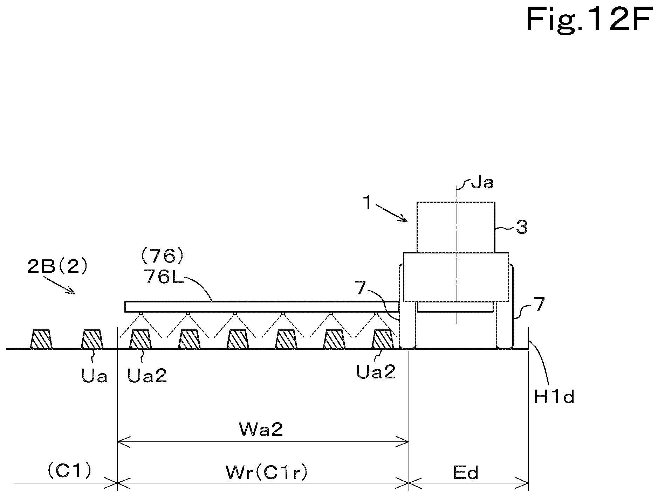

For example, when the number of ridges located in the remainder area C1r is less than or equal to the maximum number of working ridges (for example, eight) on which the pest control work can be performed only by the left spreading unit 76L, and, as illustrated in FIG. 12F, a non-work area Ed in which no ridge Ua is formed is provided between the ridges Ua2 located in the remainder area C1r and the nearest agricultural field edge H1d, the controller 51 may create the second travel line L2 in the non-work area Ed and perform the pest control work on the ridges Ua2 located in the remainder area C1r using the left spreading unit 76L.

The spreader 2B, the manner in which the spreader 2B performs work, the second travel line L2, and the method for creating the second travel line L2 are not limited to those exemplified above. Additionally or alternatively, the spreader 2B other than those exemplified above and another work manner of the spreader 2B may be used, and the second travel line L2 may be created by another method.

Additionally or alternatively, the controller 51 may create the second travel line L2 such that a work track when the agricultural machine 1 travels along the second travel line L2 and the spreader 2B performs the pest control work with the second working width Wa2 partially overlaps a work track when the agricultural machine 1 travels along the first travel line L1 adjacent to the second travel line L2 and the spreader 2B performs the pest control work with the first working width Wa1. Additionally or alternatively, the controller 51 may create a plurality of first travel lines L1 such that a work track when the agricultural machine 1 travels along one first travel line L1 and the spreader 2B performs the pest control work with the first working width Wa1 partially overlaps a work track when the agricultural machine 1 travels along another first travel line L1 adjacent to the one first travel line L1 and the spreader 2B performs the pest control work with the first working width Wa1.

Furthermore, after step S3 in FIG. 9A, if the work information of the cooperative agricultural work has not been stored in the storing unit 53 (S4 in FIG. 9A: NO), the controller 51 creates, in the agricultural field map MP2, one or more first travel lines L1 for performing the agricultural work with the first working width Wa1 (S11 in FIG. 9B). Then, if only through the creation of the first travel lines L1 in the central area C1, the remainder area C1r whose width Wr is smaller than the first working width Wa1 by a predetermined value or more is generated in the end portion of the central area C1 (S12: YES), the controller 51 calculates the width Wr of the remainder area C1r (S13). Furthermore, the controller 51 determines the second working width Wa2 of the spreader 2B corresponding to the width Wr of the remainder area C1r based on the specifications of the working width Wa of the spreader 2B (S14), and creates, in the central area C1, the second travel line L2 for performing the agricultural work with the second working width Wa2 (S15).

As described above, when the first travel lines L1 and the second travel line L2 of the target agricultural work are created on the agricultural field map MP2, the controller 51 causes information (position, length, size, and the like) indicating the travel lines L1 and L2, the central area C1, and the headlands E1a and E1c to be stored in the storing unit 53 (S16). In so doing, the controller 51 causes information on the travel lines L1 and L2 and the like for the target agricultural work to be stored in the storing unit 53 in association with other work information of the target agricultural work such that the information on the travel lines L1 and L2 and the like is included in the work information of the target agricultural work. Note that if the remainder area C1r is not generated in the end portion of the central area C1 (S12: NO), the controller 51 causes information indicating the first travel lines L1, the central area C1, and the headlands E1a and E1c to be stored in the storing unit 53 (S16).

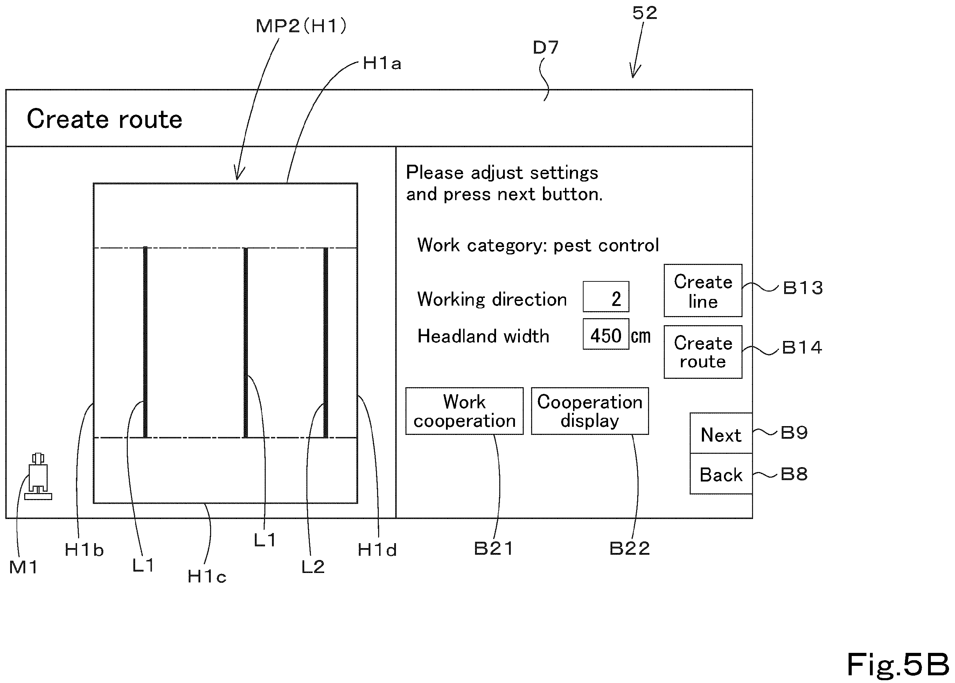

When the plurality of travel lines L1 and L2, the headland E1a and E1c, and the like are determined as described above, as illustrated in FIG. 5B, the controller 51 causes the plurality of travel lines L1 and L2 to be displayed on the agricultural field map MP2 in the route creation screen D7. After the operator or the controller 51 changes a numerical value of at least any one of the working direction and the headland width on the route creation screen D7, the ridge information on the work cooperation screen D6 (FIG. 6), and the device information of the working device 2 on the device setting screen D4 (FIG. 3), when the operator operates the create line key B13 again, the controller 51 creates the travel lines L1 and L2 on the agricultural field map MP2 in the manner as described above, and provides the headlands E1a and E1c and the central area C1.

That is, the controller 51 changes the travel lines L1 and L2 and the like in accordance with a change in at least any one of the work information of the target agricultural work, the work information of the cooperative agricultural work, and the device information of the working device 2. While viewing the travel lines L1 and L2 and the like displayed on the route creation screen D7, the operator can appropriately set the travel lines L1 and L2 and the like by changing the work information or the device information. Additionally or alternatively, also when the operator changes the set content (input values) on the previous screens D3 to D6, the controller 51 changes the travel lines L1 and L2 and the like in accordance with the change in the set content.

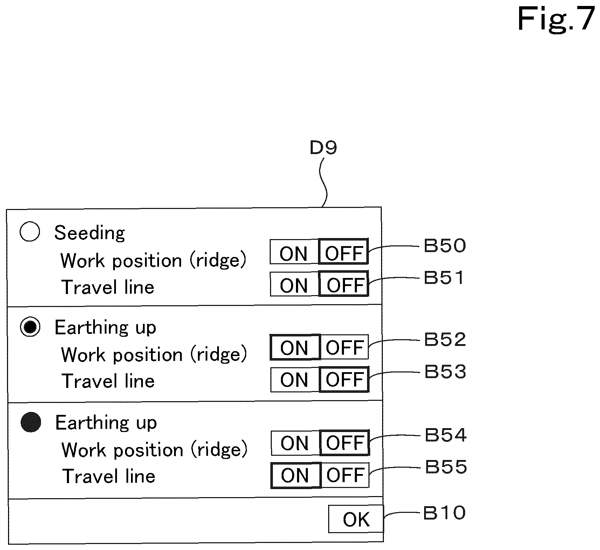

The route creation screen D7 is provided with a cooperation display key B22 for displaying not only the travel lines L1 and L2 of the target agricultural work but also a work position and the like of the cooperative agricultural work on the agricultural field map MP2. When the operator operates the cooperation display key B22, the controller 51 causes the display operation interface 52 to display a display setting screen D9 in FIG. 7. In so doing, the controller 51 may cause the display setting screen D9 to be displayed on the route creation screen D7 in a pop-up manner, or may cause the display operation interface 52 to display the display setting screen D7 instead of the route creation screen D9.

The display setting screen D9 displays display setting keys B50 to B55 to set (instruct) display (ON) and non-display (OFF) of a work position and a travel line of other agricultural work that can cooperate with the target agricultural work. As described above, the pest control work is designated as the target agricultural work on the work selection screen D3 in FIG. 2, and the earthing up work is selected and designated as the cooperative agricultural work on the work cooperation screen D6 in FIG. 6. Thus, in the initial state of the display setting screen D9, as illustrated in FIG. 7, the controller 51 turns off the display setting key B54 corresponding to a work position of the pest control work and turns on the display setting key B55 corresponding to a travel line of the pest control work. That is, the controller 51 performs setting so as not to display the work position of the pest control work, which is the target agricultural work, but to display the travel line.

Furthermore, the controller 51 turns on the display setting key B52 corresponding to a work position of the earthing up work, and turns off the display setting key B53 corresponding to a travel line of the earthing up work. That is, the controller 51 performs setting to display the work position of the earthing up work, which is the cooperative agricultural work, but not to display the travel line. Furthermore, the controller 51 turns off the display setting key B50 corresponding to the work position of the seeding work and the display setting key B51 corresponding to a travel line. That is, the controller 51 performs setting not to display the work position and the travel line of the seeding work, which is neither the target agricultural work nor the cooperative agricultural work.

The operator can switch the display setting keys B50 to B55 to ON (display) or OFF (non-display) by operating the display operation interface 52. That is, the operator can input display instruction information (first instruction information, second instruction information) for instructing display and non-display of the work positions and the travel lines of the seeding work, the earthing up work, and the pest control work by operating the display setting keys B50 to B55, respectively, through the display operation interface 52. When the operator operates the OK key B10 on the display setting screen D9, the controller 51 causes the display instruction information input through the display setting keys B50 to B55 on the display setting screen D9 to be stored in the storing unit 53, and causes the display operation interface 52 to display the route creation screen D7 in FIG. 5A and the like.

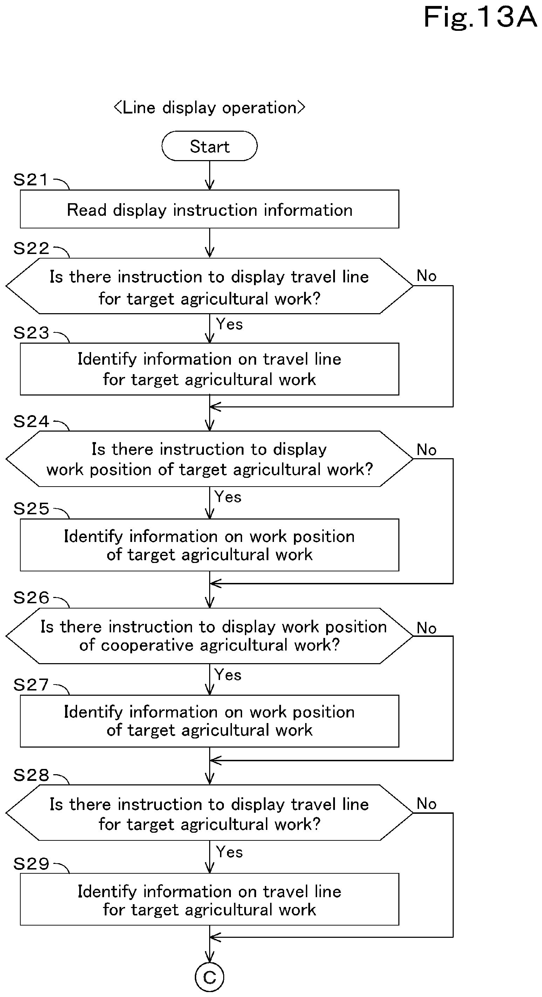

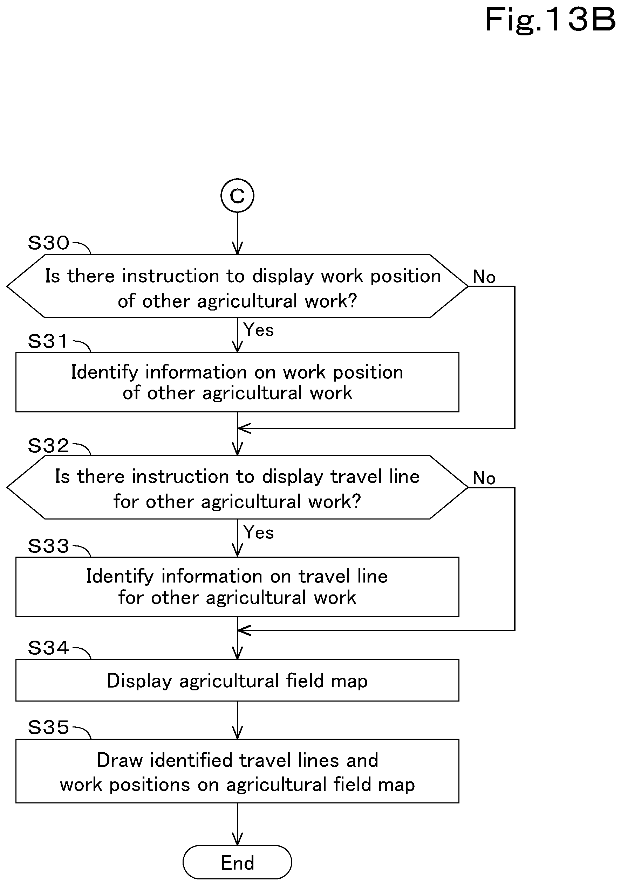

FIGS. 13A and 13B are a flowchart illustrating a display operation of the agricultural work assistance device 50. The controller 51 starts this display operation when, for example, the create line key B13 or the cooperation display key B22 is operated or the like to cause the display operation interface 52 to display a travel line or a work position of at least any one of the target agricultural work and the cooperative agricultural work.

First, the controller 51 reads the display instruction information of a plurality of agricultural works stored in the storing unit 53 (S21 in FIG. 13A). For example, when the display setting key B55 is operated to ON on the display setting screen D9 (FIG. 7) and an instruction to display the travel line of the target agricultural work (the pest control work, second agricultural work) is indicated in the display instruction information (the first instruction information, the second instruction information) (S22 in FIG. 13A: YES), the controller 51 reads out the work information of the target agricultural work from the storing unit 53 and identifies information indicating the travel line of the target agricultural work from the work information (S23).

Furthermore, when the display setting key B54 is operated to ON on the display setting screen D9 (FIG. 7) and an instruction to display the work position of the target agricultural work is indicated in the display instruction information (the second instruction information) (S24 in FIG. 13A: YES), the controller 51 reads out the work information of the target agricultural work from the storing unit 53 and identifies the work position of the target agricultural work from the work information or the like (S25).

Furthermore, when the display setting key B52 is operated to ON on the display setting screen D9 (FIG. 7) and an instruction to display the work position of the cooperative agricultural work (the earthing up work, first agricultural work) is indicated in the display instruction information (the first instruction information, the second instruction information) (S26 in FIG. 13A: YES), the controller 51 reads out the work information of the cooperative agricultural work from the storing unit 53 and identifies the work position of the cooperative agricultural work from the work information or the like (S27).

Furthermore, when the display setting key B53 is operated to ON on the display setting screen D9 (FIG. 7) and an instruction to display the travel line of the cooperative agricultural work is indicated in the display instruction information (the second instruction information) (S28 in FIG. 13A: YES), the controller 51 reads out the work information of the cooperative agricultural work from the storing unit 53 and identifies information indicating the travel line of the cooperative agricultural work from the work information (S29).

Furthermore, when the display setting key B50 is operated to ON on the display setting screen D9 (FIG. 7) and an instruction to display the work position of at least any other agricultural work (the seeding work) that can be cooperative is indicated in the display instruction information (S30 in FIG. 13B: YES), the controller 51 reads out the work information of the other agricultural work from the storing unit 53 and identifies the work position of the other agricultural work from the work information or the like (S31).

Furthermore, when the display setting key B51 is operated to ON on the display setting screen D9 (FIG. 7) and an instruction to display the travel line of the other agricultural work is indicated in the display instruction information (S32 in FIG. 13B: YES), the controller 51 reads out the work information of the other agricultural work from the storing unit 53 and identifies information indicating the travel line of the other agricultural work from the work information (S33).

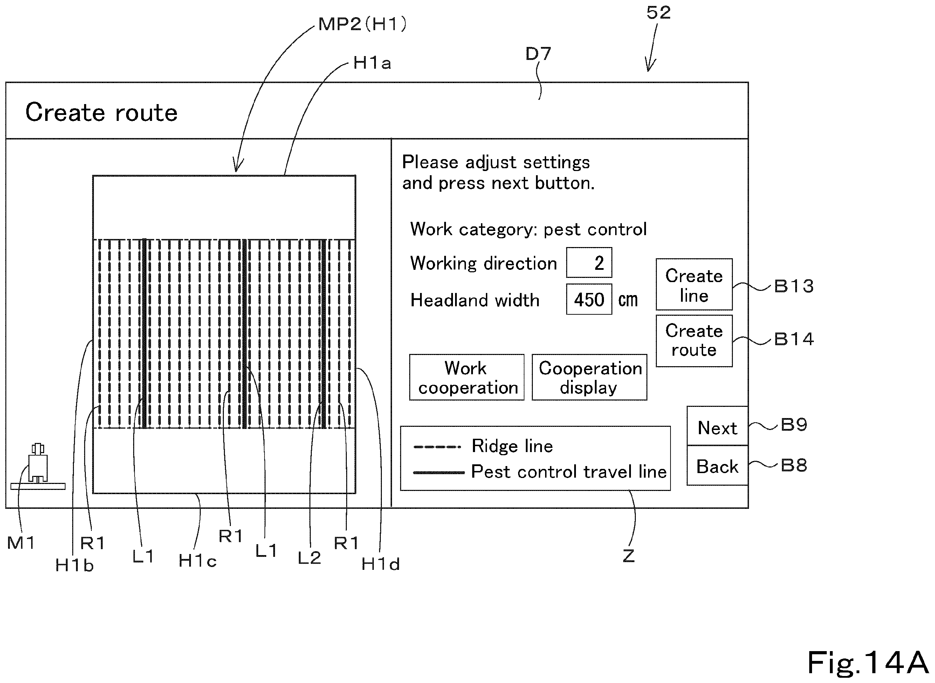

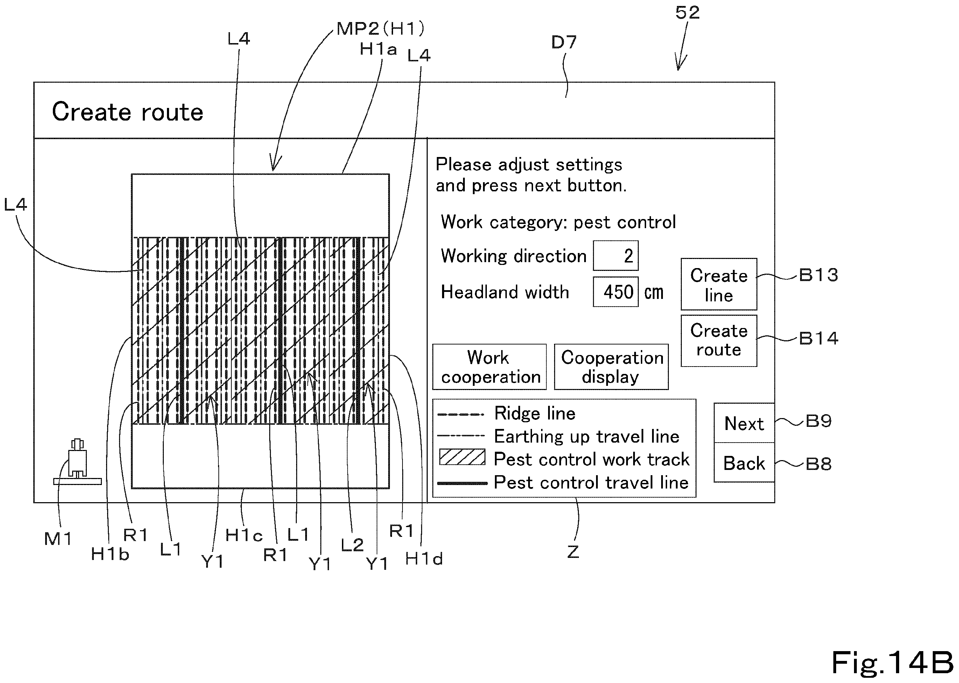

Then, as illustrated in FIGS. 14A, FIG. 14B, and the like, the controller 51 displays the agricultural field map MP2 on the route creation screen D7 or the like displayed on the display operation interface 52 (S34 in FIG. 13B), and causes the display operation interface 52 to draw the travel lines and the work positions identified in steps S22 to S33 on the agricultural field map MP2 (S35).

FIGS. 14A and 14B are diagrams illustrating an example and another example of the route creation screen D7 that displays travel lines and work positions of a plurality of types of agricultural work. On the agricultural field map MP2 in the route creation screen D7 illustrated in FIG. 14A, the travel lines L1 and L2 of the target agricultural work (the pest control work, the second agricultural work) are drawn (displayed) with thick solid lines and work positions R1 of the cooperative agricultural work (the earthing up work, the first agricultural work) are drawn with thick broken lines by the controller 51 and the display operation interface 52. Furthermore, a legend Z indicating a display form of the travel lines L1 and L2 and the work positions R1 is displayed on the route creation screen D7 by the controller 51 and the display operation interface 52.

On the agricultural field map MP2 in the route creation screen D7 illustrated in FIG. 14B, the controller 51 and the display operation interface 52 draw work positions Y1 of the target agricultural work (spreading tracks (spreading ranges) of the chemical) in addition to the travel lines L1 and L2 of the target agricultural work (the pest control work, the second agricultural work), and draw travel lines L4 of the cooperative agricultural work with dash-dot-dot lines in addition to the work positions R1 of the cooperative agricultural work (the earthing up work, the first agricultural work). The work positions Y1 of the target agricultural work extend over a wider range than the work positions R1 of the cooperative agricultural work, and are represented by a hatched rectangle in FIG. 14B. Furthermore, a legend Z indicating a display form of the travel lines L1, L2, and L4 and the work positions R1 and Y1 is displayed on the route creation screen D7 by the controller 51 and the display operation interface 52.

Although not illustrated in the drawings, when an instruction is given to display at least any one of a work position and a travel line of other agricultural work (the seeding work) that can be cooperative, the controller 51 draws at least any one of the work position and the travel line of the other agricultural work (the seeding work) on the agricultural field map MP2 in a form (or object) different from that of the travel lines L1, L2, and L4 and the work positions R1 and Y1 of the target agricultural work (the pest control work) and the cooperative agricultural work (the earthing up work).

The controller 51 may display a travel line and a work position of at least any one of the target agricultural work, the cooperative agricultural work, and the other agricultural work on the agricultural field map MP2 with objects, colors, patterns, or the like having different appearances. Additionally or alternatively, the controller 51 may display the agricultural field map MP2 including at least any one of a travel line and a work position of at least any one of the target agricultural work, the cooperative agricultural work, and the other agricultural work not only on the route creation screen D7 but also on another screen displayed by the display operation interface 52, such as a travel control screen D8 described below.

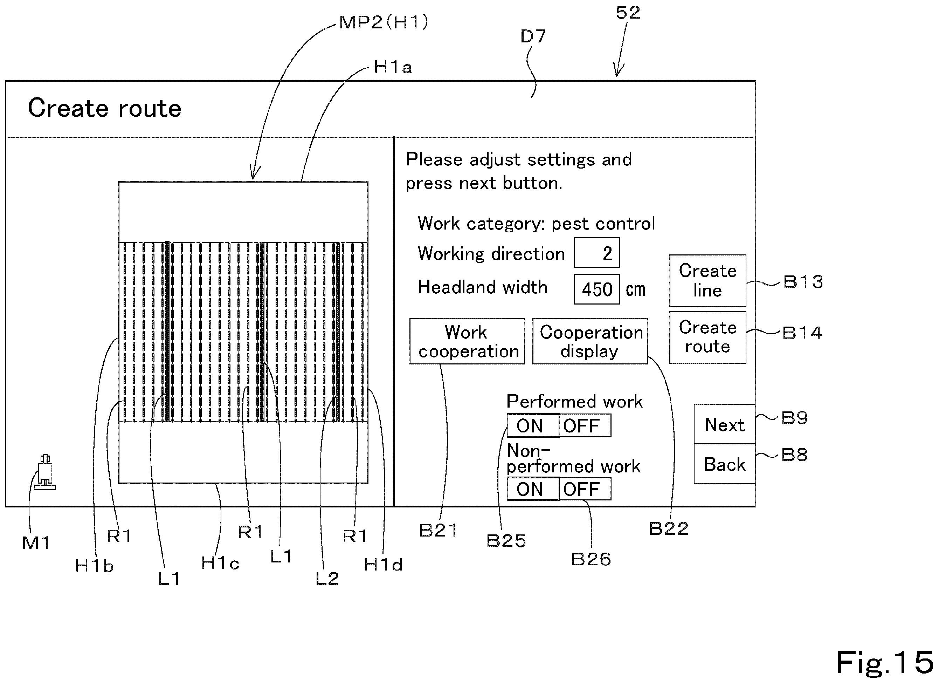

Additionally or alternatively, as illustrated in FIG. 15, the controller 51 may display, on the route creation screen D7, a display setting key B25 to set (instruct) display or non-display of a work position and a travel line of agricultural work that has been performed and a display setting key B26 to set (instruct) display or non-display of a work position and a travel line of agricultural work that has not been performed. Then, the controller 51 may control display or non-display of the work positions and the travel lines of the target agricultural work (the pest control work), the cooperative agricultural work (the earthing up work), and the other agricultural work (the seeding work) on the agricultural field map MP2 based on information (third instruction information) indicating an instruction input through the operation of the display setting keys B25 and B26.

For example, when the operator operates the display setting key B25 to OFF, the controller 51 deletes the work position and the travel line of the agricultural work that has been performed among the target agricultural work, the cooperative agricultural work, and the like displayed on the agricultural field map MP2 on the route creation screen D7. Thereafter, when the operator operates the display setting key B25 to ON, the controller 51 displays, on the agricultural field map MP2 in the route creation screen D7, the work position and the travel line of the agricultural work that has been performed among the target agricultural work, the cooperative agricultural work, and the like for which the display instruction has been input on the display setting screen D9 (FIG. 7).

When the operator operates the display setting key B26 to OFF, the controller 51 deletes the work position and the travel line of the agricultural work that has not been performed among the target agricultural work, the cooperative agricultural work, and the like displayed on the agricultural field map MP2 in the route creation screen D7. Thereafter, when the operator operates the display setting key B26 to ON, the controller 51 displays, on the agricultural field map MP2 in the route creation screen D7, the work position and the travel line of the agricultural work that has not been performed among the target agricultural work, the cooperative agricultural work, and the like for which the display instruction has been input on the display setting screen D9 (FIG. 7).

In the embodiment described above, an example in which the operator designates each of the target agricultural work and the cooperative agricultural work has been illustrated. However, in addition to this, for example, the controller 51 of the agricultural work assistance device 50 may determine one or more cooperative agricultural works according to the target agricultural work designated by the operator, and may draw a travel line of the target agricultural work and a work position of the cooperative agricultural work on the agricultural field map MP2.

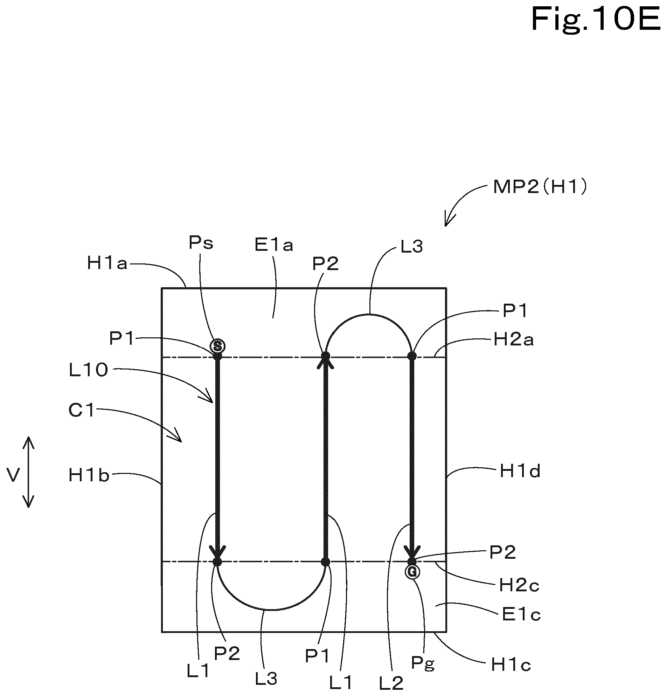

When the operator operates a create route key B14 after the travel lines L1 and L2 of the target agricultural work are displayed on the route creation screen D7, the controller 51 determines the travel order of the plurality of travel lines L1 and L2 along which the agricultural machine 1 is to travel. In so doing, for example, the controller 51 determines the travel line L2 closest to an entrance/exit of the agricultural field identified from the agricultural field information as the last travel line L2 in the travel order (the N-th travel line when N travel lines L1 are created), and determines an end point closest to the entrance/exit among end points P1 and P2 (FIG. 10E) of the last travel line L2 as a goal position Pg. Then, the controller 51 determines the travel order of the other travel lines L1 with reference to the last travel line L2, and determines one of the end points P1 and P2 of the initial (first) travel line L1 in the travel order as a start position Ps. Furthermore, the controller 51 determines one of the end points P1 and P2 of each of the plurality of travel lines L1 and L2 as a start point P1, and determines the other as an end point P2 (FIG. 10E).

Note that, for example, the controller 51 may determine the creation order of the plurality of travel lines L1 as the travel order, determine a creation start point of the first created travel line L1 as the start position Ps, and determine a creation end point of the last created travel line L1 as the goal position Pg.

After determining the travel order and the like, as illustrated in FIG. 5C, the controller 51 causes the display operation interface 52 to display the start position Ps and the goal position Pg on the agricultural field map MP2 in the route creation screen D7, display arcshaped assist lines L3 connecting the travel lines L1 adjacent to each other in the determined travel order, and display arrows indicating the direction of travel of the agricultural machine 1 on the plurality of travel lines L1. As a result, the plurality of travel lines L1 are connected, and a continuous travel route L10 is created and displayed on the agricultural field map MP2.

As another example, the create route key B14 may be omitted, and the controller 51 may automatically create the continuous travel route L10 on the agricultural field map MP2 and cause the travel route L10 to be displayed on the route creation screen D7 after determining the plurality of travel lines L1, the headlands E1a and E1c, and the central area C1 as described above. Additionally or alternatively, the create line key B13 may also be omitted. For example, after the agricultural field information, the device information of the working device 2, and the working condition is input through the display operation interface 52, the controller 51 may create the plurality of travel lines L1 on the agricultural field map MP2.

The operator can move (change) the start position Ps in the agricultural field map MP2 on the route creation screen D7 to another start point P1 or move (change) the goal position Pg to another end point P2 by operating the display operation interface 52. When the start position Ps or the goal position Pg moves to another start point P1 or end point P2, the controller 51 changes the travel order of the plurality of travel lines L1 in accordance with the movement, and changes the display of each of the start position Ps, the goal position Pg, the assist lines L3, and the arrows indicating the direction of travel of the plurality of travel lines L1.

After the start position Ps, the goal position Pg, and the like are displayed on the route creation screen D7, the operator operates the next key B9. Accordingly, the controller 51 causes information indicating the travel route L10 (the plurality of travel lines L1, the travel order, the start position Ps, the goal position Pg, and the assist lines L3) to be stored in the storing unit 53 or the internal memory, and causes the display operation interface 52 to display the travel control screen D8 illustrated in FIG. 6. Furthermore, the controller 51 generates travel data based on various kinds of setting information stored in the storing unit 53 and the internal memory, and transmits (outputs) the travel data to the controller 60 of the agricultural machine 1 through the communicator 54.

The travel data includes the type of agricultural work to be performed based on the travel data, and the device information of the working device 2 for performing the agricultural work, agricultural field information, and work information. Among them, the agricultural field information includes information indicating the agricultural field map MP2, the travel lines L1 and L2, the travel route L10, the central area C1, the headlands E1a and E1c, the ridge information, and the like. The work information includes the working widths Wa1 and Wa2 of the working device 2 corresponding to the travel lines L1 and L2.

The travel control screen D8 is a screen illustrating a state in which the agricultural work is performed with the working device 2 while the agricultural machine 1 is traveling in the agricultural field. The travel control screen D8 displays the agricultural field map MP2 including the travel route L10, the agricultural machine mark K2, a traveling state (straight travel, stop, or the like) of the agricultural machine 1, specifications of the working device 2, and the like. The controller 51 acquires the actual position of the vehicle body 3 detected by the position detector 40 through the communicator 54 at a predetermined cycle, and displays the agricultural machine mark K2 at a corresponding position in the agricultural field map MP2 corresponding to the position of the vehicle body 3 as needed. That is, the agricultural machine mark K2 in the travel control screen D8 indicates the actual position of the vehicle body 3 of the agricultural machine 1. The controller 51 displays the type ("spreader") and the work manner ("left/right/center spreading") of the working device 2 on the travel control screen D8 as the specifications of the working device 2.

The travel control screen D8 further displays the cooperation display key B22. Also when the cooperation display key B22 is operated on the travel control screen D8, the controller 51 executes the display operation illustrated in FIGS. 13A and 13B, and causes the display operation interface 52 to display the travel line or the work position of the target agricultural work, the cooperative agricultural work, and the like. The controller 51 may also display the above-described display setting keys B25 and B26 on the travel control screen D8, and control display and non-display of the work position and the travel line of the agricultural work that has been performed or control display and non-display of the work position and the travel line of the agricultural work that has not been performed, among the target agricultural work, the cooperative agricultural work, and the like, according to the operation of the display setting keys B25 and B26.

For example, the user (operator) manually drives the agricultural machine 1 while viewing the travel control screen D8, moves the agricultural machine 1 to a position corresponding to the start position Ps of the travel route L10 of the target agricultural work, then switches a mode switch 62b included in the manual operator 62 (FIG. 1) to automatic driving, and performs a start operation with an automatic switch 62a. Accordingly, the controller 60 starts an automatic work mode by automatic driving, and performs the target agricultural work on the agricultural field with the working device 2 while causing the vehicle body 3 to travel by automatic driving based on the travel data received from the agricultural work assistance device 50 and the position of the vehicle body 3 detected by the position detector 40. Note that when the user performs a stop operation with the automatic switch 62a, the controller 60 stops the automatic work mode.

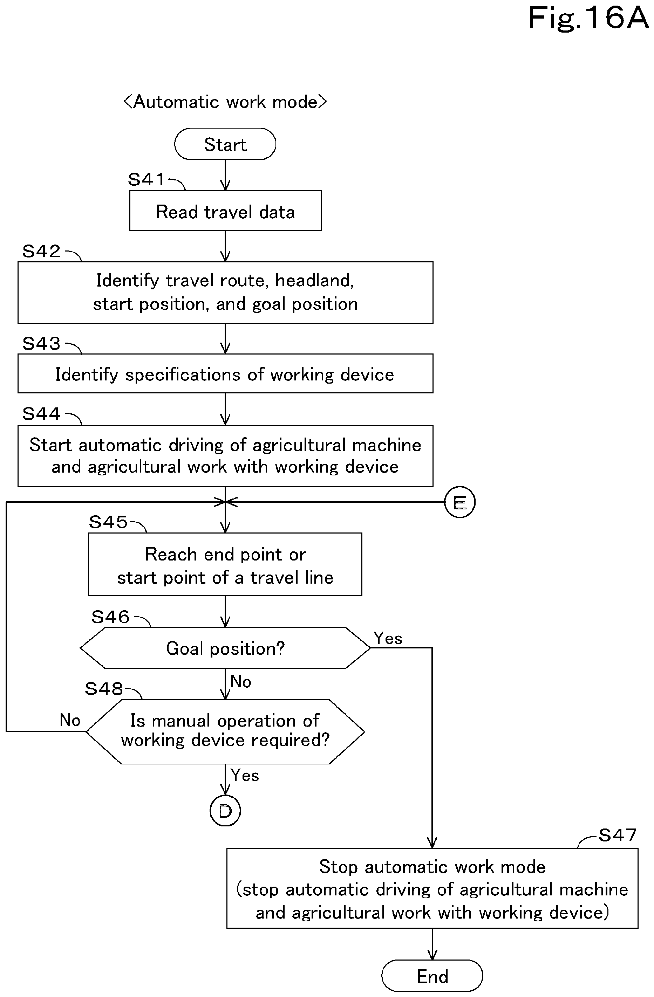

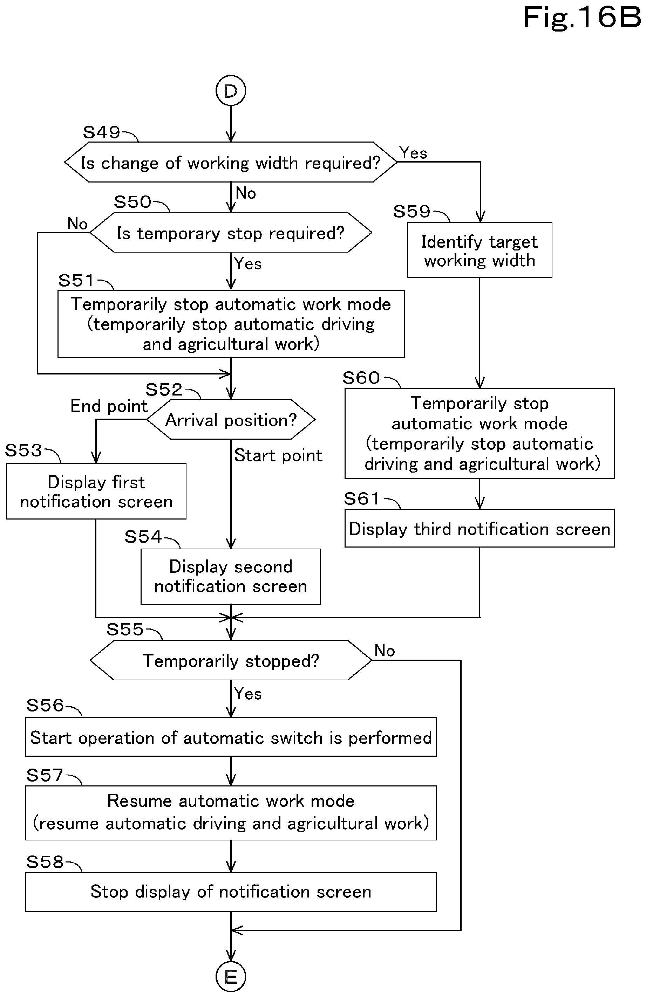

FIGS. 16A and 16B are a flowchart illustrating an operation of the agricultural work assistance system 100 in the automatic work mode. Upon a transition to the automatic work mode, first, the controller 60 of the agricultural machine 1 reads the travel data (S41 in FIG. 16A), and identifies the travel route L10 (also the travel lines L1 and L2), the headlands E1a and E1c, the start position Ps, and the goal position Pg of the target agricultural work from the travel data (S42). The controller 60 further identifies the specifications of the working device 2 from the device information of the working device 2 included in the travel data (S43).

Then, the controller 60 starts the automatic driving of the agricultural machine 1 (automatic traveling and automatic steering of the vehicle body 3) and the agricultural work with the working device 2 based on the travel route and the position of the vehicle body 3 (S44). In so doing, the controller 60 first performs the agricultural work with the working device 2 while causing the vehicle body 3 to travel along the travel lines by automatic driving from the start position Ps based on the initial travel line where the start position Ps is present and the position of the vehicle body 3. Note that the travel control screen D8 illustrated in FIG. 6 shows the traveling state of the agricultural machine 1 and the working state by the working device 2 after a certain amount of time has elapsed since the start of the automatic driving of the agricultural machine 1.

In the automatic work mode, the controller 60 performs automatic steering of the vehicle body 3. Specifically, the controller 60 calculates a deviation between the position of the vehicle body 3 detected by the position detector 40 and the travel lines L1 (or the travel line L2). When the deviation is less than a threshold, the controller 60 maintains a rotation angle of the steering shaft 31 (FIG. 1). When the deviation between the position of the vehicle body 3 and the travel lines L1 is greater than or equal to the threshold and the vehicle body 3 is positioned to the left of the travel lines L1, the controller 60 rotates the steering shaft 31 such that a steering direction of the vehicle body 3 is the right direction (automatic steering). When the deviation between the position of the vehicle body 3 and the travel lines L1 is greater than or equal to the threshold and the vehicle body 3 is positioned to the right of the travel lines L1, the controller 60 rotates the steering shaft 31 such that the steering direction of the vehicle body 3 is the left direction. Furthermore, the controller 60 automatically changes the travel speed of the vehicle body 3 based on the travel lines L1 and the position of the vehicle body 3.

When the vehicle body 3 reaches the end point P2 of any travel line (S45 in FIG. 16A) and the end point P2 is not the goal position Pg of the travel route (S46: NO), the controller 60 determines whether or not the manual operation of the working device 2 is required based on the agricultural field information, the device information of the working device 2, and the work information included in the travel data and the position of the agricultural machine 1 (the vehicle body 3).

For example, in a case where the working device 2 is a working device (such as an earthing up device or a seeder) other than the spreader 2B, the controller 60 determines that the manual operation of the working device 2 is not required (S48 in FIG. 16A: NO), continues the automatic work mode and the automatic driving, and turns the vehicle body 3 toward the start point P1 of the next travel line. Also when the vehicle body 3 reaches the start point P1 of the next travel line (S45, S46: NO), the controller 60 determines that the manual operation of the working device 2 is not required (S47: NO), continues the automatic work mode and the automatic driving, and performs the agricultural work with the working device 2 while causing the vehicle body 3 to travel along the next travel line by automatic driving. Then, when the vehicle body 3 reaches the goal position Pg of the travel route (S45, S46: YES), the controller 60 terminates the automatic work mode, and stops the automatic driving of the agricultural machine 1 and the agricultural work with the working device 2 (S47).

On the other hand, in a case where the working device 2 is the spreader 2B and the spreading units 76 (76L, 76R, and 76M, Fig. 20A and the like) provided in the spreader 2B are manually operated between the working state (ON: spreading drive state) and the non-working state (OFF: spreading stop state), the controller 60 determines that the manual operation of the working device 2 is required (S48: YES) in order to prevent the material from being uselessly spread during the turning of the vehicle body 3 and the spreader 2B.

In a case where the working device 2 is the spreader 2B and the left spreading unit 76L and the right spreading unit 76R provided in the spreader 2B are manually operated between a state (FIG. 20A, FIG. 20B, working state) in which the left spreading unit 76L and the right spreading unit 76R protrude to the left and right of the vehicle body 3 and the retracted state (FIG. 20C, non-working state) in which the left spreading unit 76L and the right spreading unit 76R do not protrude to the left and right of the vehicle body 3 by a predetermined length or more, the controller 60 determines that the manual operation of the working device 2 is required (S48 in FIG. 16A: YES) since the vehicle body 3 and the spreader 2B can be turned more safely when the left spreading unit 76L and the right spreading unit 76R are in the retracted state.

When it is determined that the manual operation of the working device 2 is required as described above, it is not necessary to change the working width Wa (S49 in FIG. 16B: NO), and thus the controller 60 confirms whether or not a temporary stop is required. As illustrated in FIG. 6, the travel control screen D8 displays a temporary stop setting key B29. The temporary stop setting key B29 is a key to input whether-to-stop information indicating whether or not to temporarily stop the automatic work mode and the automatic driving of the agricultural machine 1 when the manual operation of the working device 2 is required.

In an initial state, the temporary stop setting key B29 is set to ON, which indicates that the agricultural machine 1 is brought to a temporary stop, by the controller 51 of the agricultural work assistance device 50. Accordingly, the controller 60 determines that a temporary stop is required (S50 in FIG. 16B: YES), temporarily stops the automatic work mode, also temporarily stops the automatic driving of the agricultural machine 1, and also temporarily stops the agricultural work with the working device 2 (S51). That is, the controller 60 temporarily stops the automatic traveling and automatic steering of the vehicle body 3 and the agricultural work with the working device 2 when a transition is made from the traveling state of the vehicle body 3 along the preceding travel line of the plurality of travel lines L1 and L2 (the first travel lines L1 and the second travel line L2) to the traveling state of the vehicle body 3 along the following travel line.

In a case where the user operates the temporary stop setting key B29 to OFF, the controller 60 determines that a temporary stop is not required (S50: NO), does not temporarily stop the automatic work mode, and continues the automatic driving of the agricultural machine 1 and the agricultural work with the working device 2. Note that when the manual operation of the working device 2 is required, the controller 51 may separately provide the travel control screen D8 or the like with a start point temporary stop setting key to input whether-to-stop information indicating whether or not to bring the agricultural machine 1 (the vehicle body 3) to a temporary stop at the start point P1 of the travel line and an end point temporary stop setting key to input whether-to-stop information indicating whether or not to bring it to a temporary stop at the end point P2 of the travel line.

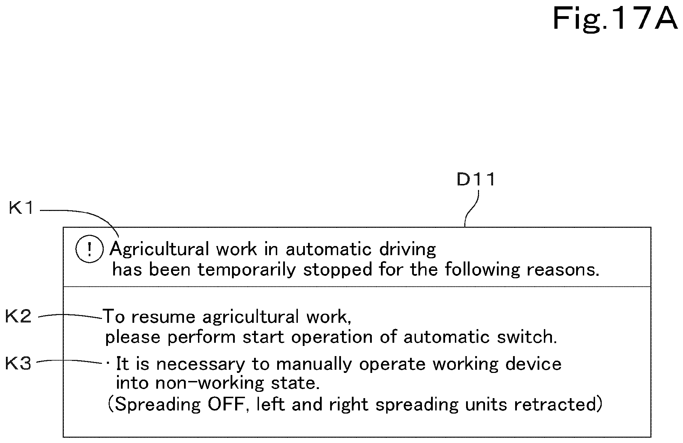

When an arrival position of the vehicle body 3 detected in step S45 in FIG. 16A is the end point P2 of the travel line (S52 in FIG. 16B: end point), the controller 60 transmits a command to the controller 51 of the agricultural work assistance device 50, and causes the display operation interface 52 to display, for example, a first notification screen D11 illustrated in FIG. 17A (S53 in FIG. 16B). Specifically, at this time, the controller 60 transmits a display command of the first notification screen D11 to the controller 51, and the controller 51, which has received the display command, causes the display operation interface 52 to display the first notification screen D11. Additionally or alternatively, the controller 51 may cause the display operation interface 52 to display the first notification screen D11 instead of the travel control screen D8 or display the first notification screen D11 on the travel control screen D8 in a pop-up manner. (The same applies to other notification screens D12 and D13 described below.)

In a case where the automatic work mode is temporarily stopped in step S51 in FIG. 16B, as illustrated in FIG. 17A, the controller 60 displays messages K1, K2, and K3 on the first notification screen D11. The message K1 indicating "Agricultural work in automatic driving has been temporarily stopped for the following reasons." indicates the temporary stop of the automatic work mode. The message K2 indicating "To resume agricultural work, please perform start operation of automatic switch." indicates that the agricultural work in the automatic work mode is resume by a start operation of the automatic switch 62a. The message K3 indicating "It is necessary to manually operate working device into non-working state. (Spreading OFF, left and right spreading units retracted)" indicates the necessity of manually operating the working device 2 and the content of the manual operation. That is, the controller 60 causes the display operation interface 52 to display the first notification screen D11, thus outputting a notification indicating the above-described three points and the content of the manual operation of the working device 2.

In a case where the automatic work mode and the vehicle body 3 have not been temporarily stopped, the controller 60 displays the messages K2 and K3 on the first notification screen D11, and does not display the message K1. (The same applies to a second notification screen D12 described below.)

The user visually recognizes the messages K1 to K3 displayed on the first notification screen D11, and manually operates the working device 2 (the spreader 2B) to the non-working state. Specifically, at this time, the user turns off the spreading units 76 (76L, 76R, and 76M) of the spreader 2B (stops spreading) or brings the left spreading unit 76L and the right spreading unit 76R into the retracted state by using the assist controller or the operation box.

When the user performs the start operation on the automatic switch 62a (S56) during the temporary stop of the automatic work mode and the vehicle body 3 (S55 in FIG. 16B: YES), the controller 60 resumes the automatic work mode, based on the travel data and the position of the vehicle body 3, also resumes the automatic driving of the vehicle body 3 (S57), and turns the vehicle body 3 toward the start point P1 of the next travel line. Furthermore, the controller 60 transmits a command to the controller 51 to stop the display of the first notification screen D11 (S58).

Specifically, at this time, the controller 60 transmits a stop command of the first notification screen D11 to the controller 51, and the controller 51, which has received the stop command, causes the display operation interface 52 to delete the first notification screen D11. If the automatic work mode is not temporarily stopped (S55: NO), the controller 60 transmits a command to the controller 51 after a predetermined time has elapsed, and stops the display of the first notification screen D11 (S58).

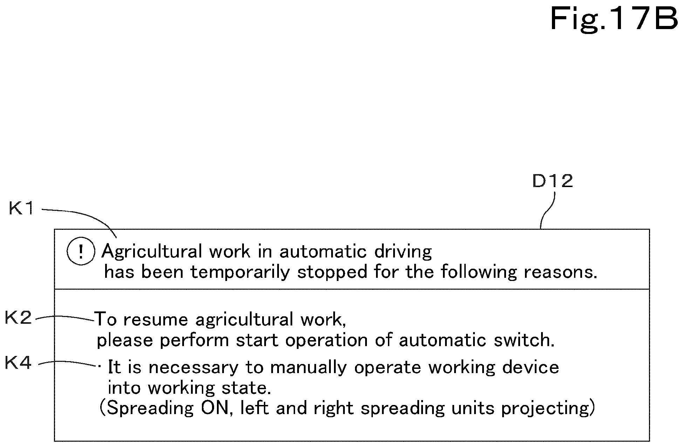

When the agricultural machine 1 turns by automatic driving and the vehicle body 3 reaches the start point P1 of the travel line (S45, S46: NO), the controller 60 determines whether or not the manual operation of the working device 2 is required. Also in so doing, the controller 60 determines that the manual operation of the working device 2 is required (S48 in FIG. 16A: YES). If it is not necessary to change the working width Wa (S49 in FIG. 16B: NO) and a temporary stop of the agricultural machine 1 is required (S50: YES), the controller 60 temporarily stops the automatic work mode to bring the vehicle body 3 to a temporary stop (S51). Then, when the arrival position of the vehicle body 3 is the start point P1 of the travel line (S52: start point), the controller 60 transmits a command to the controller 51 of the agricultural work assistance device 50, and causes the display operation interface 52 to display a second notification screen D12 illustrated in FIG. 17B (S54).

The second notification screen D12 displays the messages K1 and K2 and a message K4 indicating "It is necessary to manually operate working device into working state. (Spreading ON, left and right spreading units projecting)". The message K4 indicates the necessity of manually operating the working device 2 and the content of the manual operation. That is, the controller 60 causes the display operation interface 52 to display the second notification screen D12, thus outputting a notification indicating the above-described three respective points corresponding to the messages K1, K2, and K4 and the content of the manual operation of the working device 2.

The user visually recognizes the messages K1, K2, and K4 displayed on the second notification screen D12, and manually operates the working device 2 (the spreader 2B) to the working state. Specifically, at this time, the user causes the left spreading unit 76L and the right spreading unit 76R of the spreader 2B to protrude to the left and right of the vehicle body 3 or turns on the spreading units 76 (76L, 76R, and 76M) (drives spreading) by using the assist controller or the operation box.

Thereafter, through steps S55 to S58 in FIG. 16B, the vehicle body 3 reaches the end point P2 of the travel line L1 adjacent to the travel line L2 (FIG. 8 and the like) (S45, S46 in FIG. 16A: NO). In so doing, the working device 2 is the spreader 2B, the current working width Wa of the spreader 2B is the first working width Wa1 corresponding to the first travel lines L1, and the next travel line is the second travel line L2. In this case, the controller 60 determines that it is necessary to manually operate the current first working width Wa1 to the second working width Wa2 corresponding to the second travel line L2 (S48: YES).

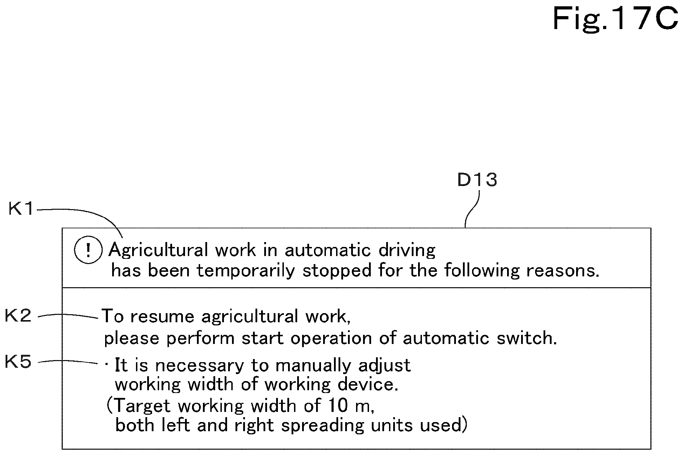

Then, since it is necessary to change the working width Wa (S49 in FIG. 16B: YES), the controller 60 identifies the second working width Wa2 as a target working width (S59). Furthermore, at this time, even if the temporary stop setting key B29 is operated to OFF and an instruction is given that a temporary stop of the agricultural machine 1 is not required, the controller 60 temporarily stops the automatic work mode to temporarily stop the automatic driving of the agricultural machine 1 and the agricultural work with the working device 2 (S60). Then, the controller 60 transmits a command to the controller 51 of the agricultural work assistance device 50, and causes the display operation interface 52 to display a third notification screen D13 illustrated in FIG. 17C (S61).

The third notification screen D13 displays the messages K1 and K2 and a message K5 indicating "It is necessary to manually adjust working width of working device. (Target working width of 10 m, left and right spreading units used)". The message K5 indicates the necessity of manually operating the working device 2, the content of the manual operation, and the target working width (the second working width Wa2). That is, the controller 60 causes the display operation interface 52 to display the third notification screen D13, thus outputting a notification indicating the above-described three respective points corresponding to the messages M1, M2, and M5, the content of the manual operation of the working device 2, and the target working width. Furthermore, before a transition is made from the traveling state of the vehicle body 3 along the preceding travel line L1 to the traveling state of the vehicle body 3 along the following travel line L2, the controller 60 outputs, through the display operation interface 52, the third notification screen D13 indicating the second working width Wa2 corresponding to the following travel line L2. Note that the controller 60 may cause the above-described message K3 (FIG. 17A) to be displayed on the third notification screen D13.

Additionally or alternatively, when the automatic work mode and the automatic driving (automatic traveling) of the vehicle body 3 are temporarily stopped, the controller 60 causes the display operation interface 52 to display the third notification screen D13 until the automatic work mode and the automatic driving of the vehicle body 3 are resumed (the same applies to the first notification screen D11 and the second notification screen D12. S53 to S58 and S61 in FIG. 16B). When the automatic work mode and the automatic driving of the vehicle body 3 are not temporarily stopped, the controller 60 causes the display operation interface 52 to display the third notification screen D13 for a predetermined time (the same applies to the first notification screen D11 and the second notification screen D12). That is, also during the transition from the traveling state of the vehicle body 3 along the preceding travel line L1 to the traveling state of the vehicle body 3 along the following travel line L2, the controller 60 outputs, through the display operation interface 52, the third notification screen D13 indicating the second working width Wa2.

The user visually recognizes the messages K1, K2, and K5 displayed on the third notification screen D13, and manually operates the working width Wa of the working device 2 (the spreader 2B) to the target working width. Specifically, at this time, the user turns off the spreading units 76 (76L, 76R, and 76M) of the spreader 2B (stops spreading) or sets the total working width of the spreading units 76 (76L, 76R, and 76M) to the target working width (the second working width Wa2) by using the assist controller or the operation box.

Thereafter, through steps S55 to S58 in FIG. 16B, when the vehicle body 3 reaches the start point P1 of the travel line L2 (FIG. 6 and the like) (S45, S46 in FIG. 16A: NO), the controller 60 determines that the manual operation of the working device 2 is required (S48: YES), that it is not necessary to change the working width Wa (S49 in FIG. 16B: NO), and that a temporary stop of the agricultural machine 1 is also not required (S50: NO). Furthermore, since the arrival position of the vehicle body 3 is the start point P1 of the travel line L2 (S52: start point), the controller 60 causes the display operation interface 52 to display the second notification screen D12 (S54). In so doing, the controller 60 may cause the message K5 to be displayed on the second notification screen D12. That is, before a transition is made from the traveling state of the vehicle body 3 along the preceding travel line L1 to the traveling state of the vehicle body 3 along the following travel line L2, the controller 60 outputs, through the display operation interface 52, the third notification screen D13 indicating the second working width Wa2 corresponding to the following travel line L2.

Further, through steps S55 to S58 in FIG. 16B, when the vehicle body 3 reaches the end point P2 of the travel line L2 (FIG. 6 and the like), that is, the goal position Pg of the travel route L10 (S45, S46 in FIG. 16A: YES), the controller 60 terminates the automatic work mode, and stops the travel of the vehicle body 3 and the agricultural work with the working device 2 (S47).

As described above, the controller 60 can execute not only the automatic work mode (automatic driving work mode) for performing agricultural work with the working device 2 while automatically driving the agricultural machine 1 based on a travel line but also the automatic work mode (autosteer work mode) for performing agricultural work with the working device 2 while performing autosteer (automatic steering) driving of the agricultural machine 1 based on the travel line. That is, the travel lines L1 and L2 created by the agricultural work assistance device 50 can be used not only for the automatic driving of the agricultural machine 1 but also for the autosteer driving of the agricultural machine 1. The automatic work mode by the autosteer driving of the agricultural machine 1 is executed by the controller 60 by the user operating the mode switch 62b (FIG. 1).

Also when the automatic work mode by autosteer driving is executed and when the agricultural machine 1 is manually driven, the controller 60 may cause the display operation interface 52 to display the travel route L10 including the travel lines L1 and L2, and may cause the display operation interface 52 to display the notification screens D11 to D13 in the procedure illustrated in FIGS. 16A and 16B. Additionally or alternatively, instead of the controller 60, the controller 51 of the agricultural work assistance device 50 may determine whether or not the manual operation of the working device 2 is required based on the agricultural field information, the device information, the work information, and the position of the agricultural machine 1 and cause the display operation interface 52 to display the notification screens D11 to D13.

Additionally or alternatively, the controller 60 or the controller 51 may determine whether or not the manual operation of the working device 2 is required other than the spreader 2B, temporarily stop the automatic work mode and the vehicle body 3 according to the determination result, and cause the display operation interface 52 to display a notification screen indicating the necessity of manually operating the working device 2, the content of the manual operation, and the temporary stop of the agricultural work. Additionally or alternatively, for example, in a case where the working device 2 is a reversible plow, when the working machine 1 reaches at least any one of the start point and the end point of the travel line, the controller 60 or the like may determine whether or not a manual operation of a direction of a tiller blade(s) or the like is required, and may cause the display operation interface 52 to display a notification screen indicating that the manual operation is required or the like, if the manual operation is required.

In the embodiment illustrated in FIG. 10D and the like, an example in which the controller 51 creates the travel lines L1 and L2 in the central area C1 on the agricultural field map MP2 has been illustrated, but this does not imply any limitation. For example, the controller 51 may create a travel line also in the headlands E1a and E1c. Then, while performing automatic driving or automatic steering of the agricultural machine 1 based on the travel line or the like created in the headlands E1a and E1c, the controller 60 may perform agricultural work such as seeding, earthing up, and pest control on the headlands E1a and E1c with the working device 2. Additionally or alternatively, while causing the agricultural machine 1 to travel by manual driving based on the travel line or the like created in the headlands E1a and E1c, the user may perform agricultural work such as seeding, earthing up, and pest control on the headlands E1a and E1c with the working device 2. Additionally or alternatively, in this case, the controller 51 may cause the display operation interface 52 to display the travel lines and the work positions of the target agricultural work and the cooperative agricultural work, and when the agricultural machine 1 (the vehicle body 3) reaches the start points P1 or the end points P2 of the travel lines, the controller 51 may cause the display operation interface 52 to display the notification screens D11 to D13.

In the embodiment illustrated in FIG. 17C, an example in which the controller 60 causes the display operation interface 52 to display the third notification screen D13, the third notification screen D13 including the target working width (the second working width Wa2) of the working device 2 (the spreader 2B), has been illustrated. However, the controller 60 or the controller 51 may also cause the current working width (first working width) of the working device 2 (the spreader 2B) to be displayed on the third notification screen D13, the travel control screen D8, or the like.

Additionally or alternatively, in a case where the user or the like feels annoyed when any one of the notification screens D11 to D13 is displayed on the display operation interface 52 each time the agricultural machine 1 (the vehicle body 3) reaches the start points P1 and the end points P2 of the travel lines L1 and L2, a key or the like for giving an instruction to appropriately stop the display of the notification screens D11 to D13 may be provided on the travel control screen D8 or the like. For example, only when the agricultural machine 1 reaches the end points P2 of the travel lines L1, the controller 60 may cause the display operation interface 52 to display the first notification screen D11 or the third notification screen D13. Alternatively, only when the agricultural machine 1 reaches the start points P1 of the travel lines L1 and L2, the controller 60 may cause the display operation interface 52 to display the second notification screen D12 or the third notification screen D13. As another example, instead of displaying the notification screens D11 to D13 on the display operation interface 52, the controller 60 may output voice data corresponding to the messages K1 to K5 described above from a speaker or the like provided in the agricultural work assistance device 50 or the agricultural machine 1.

In the embodiment described above, an example in which since the operator selects the pest control work on the work selection screen D3 illustrated in FIG. 2, the controller 51 creates the travel lines L1 and L2 of the pest control work has been illustrated. However, the operator may select other agricultural work on the work selection screen D3, and thus the controller 51 may create a travel line or the like for the agricultural work on the agricultural field map MP2. Additionally or alternatively, the operator or the controller 51 may input the agricultural field information, the device information of the working device 2, the work information, and the like from an external storage medium, a server, or the like to the agricultural work assistance device 50 through the communicator 54.

In the embodiment described above, an example in which the agricultural work assistance device 50 includes a mobile tablet terminal has been described. However, the agricultural work assistance device may include at least one of, other than a mobile tablet terminal, for example, smartphones, terminals fixed to the agricultural machine 1, computers and servers installed away from the agricultural machine 1, servers in a cloud, and the like. Additionally or alternatively, at least one of a software program indicating the processing procedure in FIGS. 9A and 9B and a software program indicating the processing procedure in FIGS. 13A and 13B may be stored in a server provided on a cloud, and a computer in which the software program is installed may execute each of the steps in FIGS. 9A and 9B or each of the steps in FIGS. 13A and 13B. Then, the computer may cause a connected display to display the travel lines, the work positions, the notification screens D11 to D13, and the like and output the travel data to the agricultural machine 1 or the like.

Embodiments discussed so far include feature(s) described in the following item(s) and achieve effect(s).

[Item 1] An agricultural work assistance system 100 according to one or more embodiments, including a controller 60 (which may be a controller 51) configured or programmed to, when agricultural work is to be performed or being performed by a working device 2 coupled to an agricultural machine 1 while the agricultural machine 1 is traveling in an agricultural field, determine whether or not a manual operation of the working device 2 is required, and an output interface (display operation interface) 52 to output a notification (notification screen) D11 to D13 indicating that the manual operation of the working device 2 is required, when the controller 60 determines that the manual operation of the working device 2 is required.

With the configuration of item 1 above, when agricultural work is to be performed or being performed by the working device 2 while the agricultural machine 1 is traveling in the agricultural field, the notification D11 to D13 indicating that the manual operation of the working device 2 is required is output through the output interface 52 if the manual operation of the working device 2 is required. Thus, the notification(s) D11 to D13 allows the user to manually operate the working device 2 appropriately and easily.

[Item 2] The agricultural work assistance system 100 according to item 1, further including a position detector 40 to detect a position of the agricultural machine 1, wherein the controller 60 is configured or programmed to determine whether or not the manual operation of the working device 2 is required when, while the agricultural work is performed by the working device 2while the agricultural machine 1 is traveling along a travel line L1, L2 created on an agricultural field map indicating the agricultural field, the agricultural machine 1 reaches a position corresponding to at least one of a start point P1 or an end point P2 of the travel line L1, L2, and, in a case that the manual operation of the working device 2 is required, temporarily stop the agricultural machine 1 and cause the output interface 52 to output the notification D11 to D13 (first notification screen D11, second notification screen D12, or third notification screen D13) indicating that the manual operation of the working device 2 is required.

With the configuration of item 2 above, the user can reliably know that the manual operation of the working device 2 is required and can manually operate the working device 2 appropriately and easily, based on the fact that the agricultural machine 1 has temporarily stopped forcibly and based on the output notification D11 to D13.

[Item 3] The agricultural work assistance system 100 according to item 1 or 2, further including an input interface (display operation interface) 52 (which may be a communicator 54 instead of a display operation interface 52) to receive input of agricultural field information representing the agricultural field, device information relating to the working device 2, and work information relating to the agricultural work, wherein the controller 60 is configured or programmed to determine whether or not the manual operation of the working device 2 is required based on the agricultural field information, the device information, the work information, and the position of the agricultural machine 1.

With the configuration of item 3 above, the controller 60 can appropriately determine whether or not the manual operation of the working device 2 is required and provide a notification when the agricultural work is performed by the working device while the agricultural machine is traveling in the agricultural field.

[Item 4] The agricultural work assistance system 100 according to item 2 or 3, wherein the agricultural machine 1 includes a vehicle body 3 to travel and to couple the working device 2 thereto, the position detector 40, and the controller 60, wherein the controller 60 is configured or programmed to perform an automatic work mode to cause the working device 2 to perform the agricultural work on the agricultural field while performing automatic travel or automatic steering of the vehicle body 3 based on a plurality of the travel lines L1, L2 created on the agricultural field map MP2 indicating the agricultural field and based on a position of the vehicle body 3 of the agricultural machine 1 detected by the position detector 40, and determine whether or not the manual operation of the working device 2 is required when the vehicle body 3 reaches each of positions corresponding to a start point P1 and an end point P2 of one of the plurality of travel lines L1, L2 during the automatic work mode, and, in a case that the manual operation of the working device 2 is required, temporarily stop the automatic work mode to temporarily stop the vehicle body 3 and cause the output interface 52 to output a notification (third notification screen) D13 indicating that the agricultural work is temporarily stopped and that the manual operation of the working device 2 is required.

With the configuration of item 4 above, when the agricultural work is performed by the working device 2 while the agricultural machine 1 is traveling in the agricultural field in the automatic work mode, if the manual operation of the working device 2 is required, the automatic work mode and the agricultural machine 1 are temporarily stopped, and the notification D13 is output through the output interface 52. Thus, the user can know the cause of the temporary stoppage and manually operate the working device 2 appropriately and easily.

[Item 5] The agricultural work assistance system 100 according to item 4, further including an automatic switch 62a to receive a start operation to issue an instruction to start the automatic work mode, wherein the controller 60 is configured or programmed to start the automatic work mode in response to the start operation of the automatic switch 62a, when the automatic work mode is temporarily stopped, cause the output interface 52 to output a notification (notification screen) D11 to D13 indicating that the agricultural work in the automatic work mode is resumed by the start operation of the automatic switch 62a, and resume the automatic work mode when the start operation of the automatic switch 62a is performed while the automatic work mode is temporarily stopped.

With the configuration of item 5 above, the user can manually operate the working device 2 appropriately and easily during the temporary stoppage of the automatic work mode and the agricultural machine 1, and can resume the agricultural work in the automatic work mode by performing the start operation of the automatic switch 62a after completing the manual operation.

[Item 6] The agricultural work assistance system 100 according to any one of items 1 to 5, wherein the controller 60 is configured or programmed to cause the output interface 52 to output the notification D11 to D13 indicating that the manual operation of the working device 2 is required and content of the manual operation.

With the configuration of item 6 above, the user can reliably know that the manual operation of the working device 2 is required and the content of the manual operation from the notification D11 to D13, and can manually operate the working device 2 more appropriately and easily.

[Item 7] The agricultural work assistance system 100 according to any one of items 2 to 6, wherein the controller 60 is configured or programmed to, in a case that the working device 2 is a working device to be manually selectively operated into a working state in which the working device 2 performs the agricultural work or into a non-working state in which the working device 2 does not perform the agricultural work, cause the output interface 52 to output the notification (second notification screen) D12 indicating that the manual operation of the working device 2 is required to bring the working device 2 into the working state when the agricultural machine 1 reaches a position corresponding to the start point P1 of the travel line L1, and cause the output interface 52 to output the notification (first notification screen) D11 indicating the manual operation of the working device 2 is required to bring the working device 2 into the non-working state when the agricultural machine 1 reaches a position corresponding to the end point P2 of the travel line L1.

With the configuration of item 7 above, when the agricultural machine 1 reaches the position corresponding to the start point P1 of the travel line L1, the user can manually operate the working device 2 into the working state appropriately and easily due to the notification D12, and thereafter can reliably perform the agricultural work with the working device 2 in the working state while causing the agricultural machine 1 to travel based on the travel line L1. Furthermore, when the agricultural machine 1 reaches the position corresponding to the end point P2 of the travel line L1, the user can manually operate the working device 2 into the non-working state appropriately and easily due to the notification D11, and thereafter can stably turn or move the agricultural machine 1 and the working device 2 in the non-working state.

[Item 8] The agricultural work assistance system 100 according to item 7, further including the working device 2 which includes a spreader 2B including at least one spreading unit 76 extending in a width direction of the agricultural machine 1, the spreader 2B being configured to spread a material from a plurality of spreading ports 76d arranged at predetermined one or more intervals in a longitudinal direction of the at least one spreading unit 76. The working device 2 is configured to be manually selectively operated into the working state in which the material is spread from at least one of the plurality of spreading ports 76d to the agricultural field or into the non-working state in which the material is not spread from the plurality of spreading ports 76d.

With the configuration of item 8 above, when the agricultural machine 1 reaches the position corresponding to the start point P1 of the travel line L1, the user can manually operate the spreader 2B into the working state due to the notification D12, and thereafter can reliably perform the work to spread materials with the spreader 2B while causing the agricultural machine 1 to travel based on the travel line L1. Furthermore, when the agricultural machine 1 reaches the position corresponding to the end point P2 of the travel line L1, the user can manually operate the spreader 2B into the non-working state due to the notification D11, and thereafter can stably turn or move the agricultural machine 1 and the working device 2 without wastefully spreading the material from the spreader 2B.

[Item 9] The agricultural work assistance system 100 according to any one of items 2 to 8, wherein the working device 2 is configured to be manually operated to adjust a working width Wa thereof that is a width of an area of the agricultural field worked by the working device 2, and the controller 60 is configured or programmed to, when the agricultural machine 1 reaches a position corresponding to at least one of the start point P1 or the end point P2 of the travel line L1, L2, in a case that the manual operation to adjust the working width Wa of the working device 2 is required, temporarily stop the agricultural machine 1 and determine a target working width Wa2 to be achieved by the adjustment, and cause the output interface 52 to output the notification D13 indicating the target working width Wa2 and indicating that the manual operation to adjust the working width Wa is required.

With the configuration of item 9 above, when the user performs the agricultural work with the working device 2 while causing the agricultural machine 1 to travel in the agricultural field, the user can know that the manual operation to adjust the working width Wa of the working device 2 is required and know the target working width Wa2 from the notification D13 at an appropriate point in time, and can perform manual operation to adjust the working width Wa of the working device 2 to the target working width Wa2 easily.

[Item 10] The agricultural work assistance system 100 according to any one of items 2 to 9, further including an input interface (display operation interface 52) to receive input of whether-to-stop information indicating whether or not to temporarily stop the agricultural machine 1, wherein the controller 60 is configured or programmed to, when the agricultural machine 1 reaches a position corresponding to at least one of the start point P1 or the end point P2 of the travel line L1, L2, temporarily stop the agricultural machine 1 in a case that the manual operation of the working device 2 is required and the whether-to-stop information indicates to temporarily stop the agricultural machine 1, and not temporarily stop the agricultural machine 1 in a case that the whether-to-stop information indicates not to temporarily stop the agricultural machine 1 even in a case that the manual operation of the working device 2 is required.

With the configuration of item 10 above, the user can manually operate the working device 2 more easily by inputting, via the input interface 52, information indicating to forcibly stop the agricultural machine 1 temporarily when the manual operation of the working device 2 is required. Furthermore, it possible to shorten the time taken for the agricultural machine 1 and the working device 2 to complete agricultural work and to improve the efficiency of the agricultural work, by the user inputting, via the input interface 52, information indicating that the agricultural machine 1 is not to be temporarily stopped when the manual operation of the working device 2 is required.

[Item 11] The agricultural work assistance system 100 according to item 10, wherein the working device 2 is configured to be manually operated to adjust a working width Wa thereof that is a width of an area of the agricultural field worked by the working device 2, and the controller 60 is configured or programmed to, when the agricultural machine 1 reaches a position corresponding to at least one of the start point P1 or the end point P2 of the travel line L1, L2, in a case that the manual operation to adjust the working width Wa of the working device 2 is required, temporarily stop the agricultural machine 1 even in a case that the whether-to-stop information indicates not to temporarily stop the agricultural machine 1.

With the configuration of item 11 above, the controller 60 allows the user to know that the manual operation to adjust the working width Wa of the working device 2 is required and reliably perform manual operation to adjust the working width Wa of the working device 2 to the target working width Wa2, based on the temporary stoppage of the agricultural machine 1 and the notification D11 to D13. Furthermore, when the travel of the agricultural machine 1 is resumed thereafter, it is possible to cause the working device 2 to appropriately perform the agricultural work with the working width Wa2.

[Item 12] The agricultural work assistance system 100 according to any one of items 2 to 11, wherein the output interface 52 includes a display 52, and the controller 60 is configured or programmed to cause the display 52 to display the agricultural field map MP2, the position of the agricultural machine 1, and the notification D11 to D13 indicating that the manual operation of the working device 2 is required.

With the configuration of item 12 above, the user can visually recognize the agricultural field map MP2, the position of the agricultural machine 1, and the notification D 11 to D13 displayed on the display 52, and perform the agricultural work with the working device 2 appropriately and easily while causing the agricultural machine 1 to travel in the agricultural field. The user can also manually operate the working device 2 appropriately and easily.

[Item 13] An agricultural machine 1 according to one or more embodiments, including a vehicle body 3 to travel, a controller 60 configured or programmed to, when agricultural work is to be performed or being performed by a working device 2 coupled to the vehicle body 3 while the vehicle body 3 is traveling in an agricultural field, determine whether or not a manual operation of the working device 2 is required, and an output interface 52 to output a notification D11 to D13 indicating that the manual operation of the working device 2 is required, when the controller 60 determines that the manual operation of the working device 2 is required.

With the configuration of item 13 above, when performing agricultural work with the working device 2 while causing the agricultural machine 1 to travel in the agricultural field, the user can look at the notification D11 to D13 output via the output interface 52 at an appropriate point in time and manually operate the working device 2 appropriately and easily.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: agricultural machine
- 2: working device
- 2B: spreader (working device)
- 3: vehicle body
- 40: position detector
- 52: display operation interface (input interface, display, output interface)
- 60: controller
- 62a: automatic switch
- 76: spreading unit
- 76d: spreading port
- 100: agricultural work assistance system
- D11: first notification screen
- D12: second notification screen
- D13: third notification screen
- L1: first travel line
- L2: second travel line
- MP2: agricultural field map
- P1: start point
- P2: end point
- Wa: working width

## Claims

1. An agricultural work assistance system comprising:
a controller configured or programmed to, when agricultural work is to be performed or being performed by a working device coupled to an agricultural machine while the agricultural machine is traveling in an agricultural field, determine whether or not a manual operation of the working device is required; and
an output interface to output a notification indicating that the manual operation of the working device is required, when the controller determines that the manual operation of the working device is required.

2. The agricultural work assistance system according to claim 1, further comprising a position detector to detect a position of the agricultural machine; wherein
the controller is configured or programmed to determine whether or not the manual operation of the working device is required when, while the agricultural work is performed by the working device while the agricultural machine is traveling along a travel line created on an agricultural field map indicating the agricultural field, the agricultural machine reaches a position corresponding to at least one of a start point or an end point of the travel line, and, in a case that the manual operation of the working device is required, temporarily stop the agricultural machine and cause the output interface to output the notification indicating that the manual operation of the working device is required.

3. The agricultural work assistance system according to claim 2, further comprising an input interface to receive input of agricultural field information representing the agricultural field, device information relating to the working device, and work information relating to the agricultural work; wherein
the controller is configured or programmed to determine whether or not the manual operation of the working device is required based on the agricultural field information, the device information, the work information, and the position of the agricultural machine.

4. The agricultural work assistance system according to claim 2, wherein
the agricultural machine includes:
a vehicle body to travel and to couple the working device thereto;
the position detector; and
the controller; wherein
the controller is configured or programmed to:
perform an automatic work mode to cause the working device to perform the agricultural work on the agricultural field while performing automatic travel or automatic steering of the vehicle body based on a plurality of the travel lines created on the agricultural field map indicating the agricultural field and based on a position of the vehicle body of the agricultural machine detected by the position detector; and
determine whether or not the manual operation of the working device is required when the vehicle body reaches each of positions corresponding to a start point and an end point of one of the plurality of travel lines during the automatic work mode, and, in a case that the manual operation of the working device is required, temporarily stop the automatic work mode to temporarily stop the vehicle body and cause the output interface to output a notification indicating that the agricultural work is temporarily stopped and that the manual operation of the working device is required.

5. The agricultural work assistance system according to claim 4, further comprising an automatic switch to receive a start operation to issue an instruction to start the automatic work mode; wherein
the controller is configured or programmed to:
start the automatic work mode in response to the start operation of the automatic switch;
when the automatic work mode is temporarily stopped, cause the output interface to output a notification indicating that the agricultural work in the automatic work mode is resumed by the start operation of the automatic switch; and
resume the automatic work mode when the start operation of the automatic switch is performed while the automatic work mode is temporarily stopped.

6. The agricultural work assistance system according to claim 1, wherein the controller is configured or programmed to cause the output interface to output the notification indicating that the manual operation of the working device is required and content of the manual operation.

7. The agricultural work assistance system according to claim 2, wherein
the controller is configured or programmed to, in a case that the working device is a working device to be manually selectively operated into a working state in which the working device performs the agricultural work or into a non-working state in which the working device does not perform the agricultural work:
cause the output interface to output the notification indicating that the manual operation of the working device is required to bring the working device into the working state when the agricultural machine reaches a position corresponding to the start point of the travel line; and
cause the output interface to output the notification indicating the manual operation of the working device is required to bring the working device into the non-working state when the agricultural machine reaches a position corresponding to the end point of the travel line.

8. The agricultural work assistance system according to claim 7, further comprising the working device which includes a spreader including at least one spreading unit extending in a width direction of the agricultural machine, the spreader being configured to spread a material from a plurality of spreading ports arranged at predetermined one or more intervals in a longitudinal direction of the at least one spreading unit; wherein
the working device is configured to be manually selectively operated into the working state in which the material is spread from at least one of the plurality of spreading ports to the agricultural field or into the non-working state in which the material is not spread from the plurality of spreading ports.

9. The agricultural work assistance system according to claim 2, wherein
the working device is configured to be manually operated to adjust a working width thereof that is a width of an area of the agricultural field worked by the working device; and
the controller is configured or programmed to, when the agricultural machine reaches a position corresponding to at least one of the start point or the end point of the travel line, in a case that the manual operation to adjust the working width of the working device is required, temporarily stop the agricultural machine and determine a target working width to be achieved by the adjustment, and cause the output interface to output the notification indicating the target working width and indicating that the manual operation to adjust the working width is required.

10. The agricultural work assistance system according to claim 2, further comprising an input interface to receive input of whether-to-stop information indicating whether or not to temporarily stop the agricultural machine; wherein
the controller is configured or programmed to, when the agricultural machine reaches a position corresponding to at least one of the start point or the end point of the travel line:
temporarily stop the agricultural machine in a case that the manual operation of the working device is required and the whether-to-stop information indicates to temporarily stop the agricultural machine; and
not temporarily stop the agricultural machine in a case that the whether-to-stop information indicates not to temporarily stop the agricultural machine even in a case that the manual operation of the working device is required.

11. The agricultural work assistance system according to claim 10, wherein
the working device is configured to be manually operated to adjust a working width thereof that is a width of an area of the agricultural field worked by the working device; and
the controller is configured or programmed to, when the agricultural machine reaches a position corresponding to at least one of the start point or the end point of the travel line, in a case that the manual operation to adjust the working width of the working device is required, temporarily stop the agricultural machine even in a case that the whether-to-stop information indicates not to temporarily stop the agricultural machine.

12. The agricultural work assistance system according to claim 2, wherein
the output interface includes a display; and
the controller is configured or programmed to cause the display to display the agricultural field map, the position of the agricultural machine, and the notification indicating that the manual operation of the working device is required.

13. An agricultural machine comprising:
a vehicle body to travel;
a controller configured or programmed to, when agricultural work is to be performed or being performed by a working device coupled to the vehicle body while the vehicle body is traveling in an agricultural field, determine whether or not a manual operation of the working device is required; and
an output interface to output a notification indicating that the manual operation of the working device is required, when the controller determines that the manual operation of the working device is required.
